# EUROPÄISCHE PATENTSCHRIFT

(11) **EP 3 212 515 B1**
(45) Veröffentlichungstag und Bekanntmachung des Hinweises auf die Patenterteilung: **21.10.2020**
(21) Anmeldenummer: 15784946.4
(22) Anmeldetag: 22.10.2015
(51) Int. Cl.: B65B 51/14, B29C 65/00, B65B 51/30, B65D 5/42, B29C 65/08, B29C 65/82, B29C 65/10, B29C 65/14, B29C 65/16, B29L 31/00, B29K 705/02

(54) **VORRICHTUNG, INSBESONDERE ZUM VERSCHLIESSEN EINES KOPFBEREICHS EINES NAHRUNGSMITTELBEHAELTERS, AUS EINEM LAMINAT MIT GESCHAELTEM UND UMGESCHLAGENEN RANDBEREICH**
DEVICE, IN PARTICULAR FOR CLOSING A TOP PORTION OF A FOOD CONTAINER, CONSISTING OF A LAMINATE WITH A PEELED AND FOLDED-BACK EDGE REGION
DISPOSITIF, EN PARTICULIER POUR FERMER LE HAUT D'UN CONTENANT DE PRODUIT ALIMENTAIRE, COMPRENANT UN STRATIFIÉ PRÉSENTANT UNE ZONE DE BORD DÉPOUILLÉE ET RABATTUE

(30) Priorität: 31.10.2014 DE 102014015958
(43) Veröffentlichungstag der Anmeldung: 06.09.2017
(73) Patentinhaber: SIG Technology AG, 8212 Neuhausen (CH)
(72) Erfinder: GARITZ, Norbert, 52428 Jülich (DE); PETERGES, Olivier, B-4700 Eupen (BE); VETTEN, Thomas, 40223 Düsseldorf (DE); ALEF, Ulrich, 41844 Wegberg (DE)
(74) Vertreter: Herzog IP Patentanwalts GmbH
(86) Internationale Anmeldenummer: PCT/EP2015/074531
(87) Internationale Veröffentlichungsnummer: WO 2016/066530

(56) Entgegenhaltungen:
- EP-A1- 1 241 100
- WO-A1-2008/102250
- WO-A1-2013/120535
- DE-A1-102006 045 338
- DE-A1-102007 060 442
- DE-C1- 3 316 238
- DE-C1- 10 027 735
- US-A- 3 506 516
- US-A- 4 159 220
- US-A- 5 385 527
- US-A- 6 110 548
- US-A1- 2004 011 007

## Beschreibung

Die vorliegende Erfindung betrifft eine Vorrichtung, beinhaltend ein erstes Fixierelement, ein weiteres Fixierelement, beinhaltend eine Aussparung, und einen gefalteten flächenförmigen Verbund, insbesondere zum Verschließen eines Behältervorläufers, beinhaltend den flächenförmigen Verbund; ein Verfahren zum Verbinden einer ersten Verbundschicht mit einer zweiten Verbundschicht eines flächenförmigen Verbunds durch ein erstes Fixierelement und ein weiteres Fixierelement, beinhaltend eine Aussparung; einen geschlossenen Behälter, erhältlich durch das vorstehende Verfahren; einen geschlossenen Behälter, beinhaltend eine Naht und eine Vertiefung; und eine Verwendung der vorstehenden Vorrichtung.

Seit langer Zeit erfolgt die Konservierung von Nahrungsmitteln, seien es Nahrungsmittel für den menschlichen Verzehr oder auch Tiernahrungsprodukte, in dem diese entweder in einer Dose oder in einem mit einem Deckel verschlossenen Glas gelagert werden. Hierbei kann die Haltbarkeit zum einen dadurch erhöht werden, in dem jeweils das Nahrungsmittel und der Behälter, hier Glas bzw. Dose, getrennt möglichst weitestgehend entkeimt werden und dann das Nahrungsmittel in den Behälter gefüllt und dieser verschlossen wird. Diese an sich über eine lange Zeit bewährten Maßnahmen zur Erhöhung der Haltbarkeit von Nahrungsmittel haben jedoch eine Reihe von Nachteilen, beispielsweise eine nochmals notwendige nachgelagerte Entkeimung. Dosen und Gläser haben aufgrund ihrer im Wesentlichen zylindrischen Form den Nachteil, dass eine sehr dichte und platzsparende Lagerung nicht möglich ist. Zudem haben Dosen und Gläser ein erhebliches Eigengewicht, das zu einem erhöhten Energieaufwand beim Transport führt. Außerdem ist zur Herstellung von Glas, Weißblech oder Aluminium, selbst wenn die hierzu verwendeten Rohstoffe aus dem Recycling stammen, ein recht hoher Energieaufwand notwendig. Bei Gläsern kommt erschwerend ein erhöhter Transportaufwand hinzu.

Die Gläser werden meist in einer Glashütte vorgefertigt und müssen dann unter Nutzen erheblicher Transportvolumina zu dem das Nahrungsmittel abfüllenden Betrieb transportiert werden. Darüber hinaus lassen sich Gläser und Dosen nur mit einem erheblichen Kraftaufwand oder unter Zuhilfenahme von Werkzeugen und damit eher umständlich öffnen. Bei Dosen kommt eine hohe Verletzungsgefahr durch scharfe, beim Öffnen entstehende Kanten hinzu. Bei Gläsern kommt es immer wieder dazu, dass beim Füllen oder Öffnen der gefüllten Gläser Glassplitter in das Nahrungsmittel gelangen, die schlimmstenfalls zu inneren Verletzungen beim Verzehr des Nahrungsmittels führen können. Zudem müssen sowohl Dosen als auch Gläser zur Kennzeichnung und Bewerbung des Nahrungsmittelinhalts mit Etiketten beklebt werden. Die Gläser und Dosen können nicht direkt mit Informationen und Werbedarstellungen bedruckt werden. Zusätzlich zu dem eigentlichen Druck sind also ein Substrat dafür, ein Papier oder eine geeignete Folie, sowie ein Befestigungsmittel, ein Klebe- oder ein Siegelmittel, notwendig.

Andere Verpackungssysteme sind aus dem Stand der Technik bekannt, um Nahrungsmittel über einen langen Zeitraum möglichst ohne Beeinträchtigungen zu lagern. Hierbei handelt es sich um aus flächenförmigen Verbunden - häufig auch als Laminate bezeichnet - hergestellte Behälter. Derartige flächenförmige Verbunde sind häufig aufgebaut aus einer thermoplastischen Kunststoffschicht, einer meist aus Karton oder Papier bestehenden Trägerschicht, einer Haftvermittlerschicht, einer Barriereschicht und einer weiteren Kunststoffschicht, wie unter anderem in WO 90/09926 A2 offenbart.

Diese Laminatbehälter weisen bereits viele Vorteile gegenüber den herkömmlichen Gläsern und Dosen auf. Gleichwohl bestehen Verbesserungsmöglichkeiten auch bei diesen Verpackungssystemen.

So sind Laminatbehälter häufig dadurch gekennzeichnet, dass sie aus einem Laminat bestehen, welches mehrfach gefaltet wurde, wobei entgegengesetzte Endbereiche des Laminats aufeinander gesiegelt wurden, um zunächst einen mantel- oder schlauchförmigen Vorläufer eines geschlossenen Behälters zu bilden. Dabei bilden die aufeinander gesiegelten Endbereiche eine Längsnaht, welche auch in dem geschlossenen Behälter vorhanden sein wird. Diese Längsnaht beinhaltet sowohl auf der Innenseite des Behälters, als auch auf der Außenseite eine Stoßkante des Laminats, an der Feuchtigkeit in den Schichtaufbau des Laminats, insbesondere in die meist aus Karton oder Pappe bestehende Trägerschicht eindringen kann. Dies muss mindestens auf der Innenseite der Längsnaht verhindert werden, da in dem Behälter wasserhaltige Nahrungsmittel aufbewahrt werden sollen. Im Stand der Technik wird dazu das Laminat vor dem Ausbilden der Längsnaht im Bereich einer späteren Stoßkante geschält und in dem geschälten Bereich eine Faltung erzeugt, so dass der geschälte Bereich auf sich selbst umgelegt wird. Anschließend wird zum Beispiel durch Siegeln die Längsnaht erzeugt. Hierzu wird der auf sich selbst umgeschlagene geschälte Bereich mit einem weiteren durch Faltung darüber gelegten Bereich des Laminats verpresst. Die nun dem Inneren des Behältervorläufers zugewandte Stoßkante der Längsnaht ist umlaufend durch die innerste Schicht des Laminats gegen das Eindringen von Wasser geschützt. Der so erhaltene Behältervorläufer muss nach dem Befüllen, insbesondere im Kopfbereich, verschlossen werden. Dies erfolgt üblicherweise durch Verpressen und Siegeln quer zur Längsnaht. Die dabei zu verpressende Längsnaht weist vor dem Verpressen auf der von dem Inneren des Behältervorläufers abgewandten Seite eine Verdickung auf. Diese kann zum einen dadurch zu Stande kommen, dass der auf sich selbst umgelegte geschälte Bereich dicker sein kann als die sonstige Laminatdicke, und zum anderen liegen im Bereich der Längsnaht mindestens zwei Bereiche des Laminats übereinander. Damit dieser verdickte Bereich, der sich über die gesamte Längsnaht erstreckt, bei dem Verpressen, zum Beispiel im Kopfbereich des Behältervorläufers, nicht zu stark gequetscht und somit beschädigt wird, muss eine der beiden Backen zwischen denen verpresst wird eine Aussparung zum Aufnehmen der Verdickung aufweisen. Im Stand der Technik wird die Aussparung wie intuitiv leicht einsichtig in der Pressbacke angeordnet, welche auf der verdickten Seite der Längsnaht angreift. Überraschend wurde gefunden, dass diese Anordnung verbessert werden und somit die zu erreichende Dichtigkeit des erzeugten Behälters erhöht werden kann.

Im Stand der Technik lehrt DE 100 27 735 Cleinen dünnwandigen Behälter aus einem flexiblen Basismaterial, welches mit einer ultraschall-schweißbaren flexiblen Schicht überzogen ist, wobei der Behälter eine Wand mit mindestens einem ersten Wandabschnitt, einem zweiten Wandabschnitt, der parallel und eng anliegend zum ersten Wandabschnitt angeordnet ist und einen Längsrand aufweist, und einem dritten Wandabschnitt umfasst, der parallel und mindestens abschnittsweise eng anliegend zum ersten Wandabschnitt angeordnet ist, einen Längsrand aufweist und im Bereich seines Längsrandes den Längsrand des zweiten Wandabschnitts überlappt, wobei der zweite und der dritte Wandabschnitt entlang einer insgesamt quer zu den Längsrändern verlaufenden Schweißlinie mit dem ersten Wandabschnitt verschweißt sind.

Allgemein ist es eine Aufgabe der vorliegenden Erfindung, einen Nachteil, der sich aus dem Stand der Technik ergibt, zumindest teilweise zu überwinden. Eine weitere Aufgabe der Erfindung ist es, einen Behälter oder einen Behältervorläufer oder beides bereitzustellen, wobei eine Naht des Behälters bzw. des Behältervorläufers, bevorzugt eine Längsnaht, nach innen oder außen oder beides gegen ein Eindringen von Feuchtigkeit geschützt ist. Eine weitere Aufgabe der Erfindung ist es, einen Behälter bereitzustellen, der eine Naht, bevorzugt eine Kopf- oder Giebelnaht, mit einer erhöhten Dichtigkeit aufweist. Eine weitere Aufgabe der Erfindung ist es, einen Behälter bereitzustellen, der eine Naht, bevorzugt eine Kopf- oder Giebelnaht, mit weniger zu Undichtigkeiten führenden Kanälen oder Verfärbungen oder beidem. Eine weitere Aufgabe der Erfindung ist es, einen Behälter bereitzustellen, wobei der Behälter möglichst flüssigkeits- und gasdicht ist. Eine weitere Aufgabe der Erfindung ist es, einen Behälter bereitzustellen, wobei der Behälter einen Geschmack eines Produktes, welches der Behälter beinhaltet, möglichst wenig verfälscht. Eine weitere Aufgabe der Erfindung ist es, einen Behälter bereitzustellen, wobei der Behälter eine Kombination aus 2 oder mehr der obigen Vorteile aufweist. Eine weitere Aufgabe der Erfindung ist es, einen Behälter oder einen Behältervorläufer oder beides bereitzustellen, wobei ein Herstellen des Behälters bzw. des Behältervorläufers durch eines ausgewählt aus der Gruppe bestehend aus eine längere Standzeit eines Siegelwerkzeugs, insbesondere einer Sonotrode, weniger Staubentwicklung, weniger Lärmentwicklung, und eine längere Standzeit eines Spaltwerkzeugs, oder eine Kombination aus mindestens zwei davon gekennzeichnet ist. Eine weitere Aufgabe der Erfindung ist es, einen Behälter oder einen Behältervorläufer oder beides bereitzustellen, wobei zwischen aufeinanderliegenden geschälten Bereichen eines Trägermaterials des Behälters bzw. des Behältervorläufers sich möglichst wenig zusätzliches Verbindungsmaterial, wie zum Beispiel eine Siegelschicht oder ein Kleber, befindet. Eine weitere Aufgabe der Erfindung ist es, einen Behälter oder einen Behältervorläufer oder beides bereitzustellen, wobei eine größere Auswahlmöglichkeit bezüglich einer Schichtdicke einer geschälten Trägerschicht des Behälters bzw. des Behältervorläufers besteht. Eine weitere Aufgabe der Erfindung ist es, einen Behälter oder einen Behältervorläufer oder beides bereitzustellen, wobei ein geschälter Bereich einer Wandung des Behälters bzw. des Behältervorläufers stabiler oder steifer und somit beständiger oder besser zu verarbeiten oder beides ist.

Eine weitere Aufgabe der Erfindung ist es, ein Verfahren zum Herstellen von Behältern bereitzustellen, wobei durch das Verfahren ein geringerer Anteil an Ausschussbehältern, insbesondere Behälter nicht ausreichender Dichtigkeit, produziert werden kann. Eine weitere Aufgabe der Erfindung ist es, ein Verfahren zum Herstellen von Behältern bereitzustellen, wobei das Verfahren einfacher oder schneller oder beides ist. Eine weitere Aufgabe der Erfindung ist es, ein Verfahren zum Herstellen von Behältern bereitzustellen, wobei ein, vorzugsweise im Kopfbereich des Behälters, eine möglichst flüssigkeits- und gasdichte Siegelung erreicht wird. Eine weitere Aufgabe der Erfindung ist es, ein Verfahren zum Herstellen von Behältern bereitzustellen, wobei eine Betriebslebensdauer eines Siegelwerkzeugs verbessert ist. Eine weitere Aufgabe der Erfindung ist es, ein Verfahren zum Herstellen von Behältern bereitzustellen, wobei, vorzugsweise im Kopfbereich des Behälters, ein Verfärben von Behälterschichten durch ein Siegeln, insbesondere ein Verbrennen von Behälterschichten, möglichst vermieden wird. Eine weitere Aufgabe der Erfindung ist es, ein Verfahren zum Herstellen von Behältern bereitzustellen, wobei Behälterschichten bei einem Siegeln und Verpressen, vorzugsweise im Kopfbereich des Behälters, möglichst gleichmäßig zusammengedrückt werden. Eine weitere Aufgabe der Erfindung ist es, ein Verfahren zum Herstellen von Behältern bereitzustellen, wobei das Verfahren eine Kombination aus 2 oder mehr der obigen Vorteile aufweist.

Ein Beitrag zur mindestens teilweisen Erfüllung mindestens einer der obigen Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zur Erfüllung mindestens einer der erfindungsgemäßen Aufgaben leistet ein Beispiel 1 einer Offenbarung einer Vorrichtung 1 beinhaltend ein erstes Fixierelement, ein weiteres Fixierelement und einen gefalteten flächenförmigen Verbund; wobei das erste Fixierelement eine erste Fixieroberfläche beinhaltet und das weitere Fixierelement eine weitere Fixieroberfläche beinhaltet; wobei der gefaltete flächenförmige Verbund zwischen der ersten Fixieroberfläche und der weiteren Fixieroberfläche mindestens teilweise fixiert ist; wobei der gefaltete flächenförmige Verbund einen ersten Verbundbereich und einen weiteren Verbundbereich beinhaltet; wobei der erste Verbundbereich eine erste Schichtfolge, beinhaltend als einander überlagernde Schichten in Richtung von der weiteren Fixieroberfläche zu der ersten Fixieroberfläche eine erste Verbundschicht, eine zweite Verbundschicht, eine dritte Verbundschicht und eine vierte Verbundschicht beinhaltet; wobei in dem ersten Verbundbereich die dritte Verbundschicht mit der vierten Verbundschicht verbunden ist; wobei der weitere Verbundbereich eine weitere Schichtfolge, beinhaltend als einander überlagernde Schichten in Richtung von der weiteren Fixieroberfläche zu der ersten Fixieroberfläche die erste Verbundschicht, die zweite Verbundschicht und die vierte Verbundschicht, beinhaltet; wobei in dem weiteren Verbundbereich die zweite Verbundschicht mit der vierten Verbundschicht verbunden ist; wobei der weitere Verbundbereich an den ersten Verbundbereich angrenzt; wobei die erste Verbundschicht eine erste Trägerschicht beinhaltet; wobei die zweite Verbundschicht eine zweite Trägerschicht beinhaltet; wobei die dritte Verbundschicht eine dritte Trägerschicht beinhaltet; wobei die vierte Verbundschicht eine vierte Trägerschicht beinhaltet; wobei in dem ersten Verbundbereich die erste Trägerschicht oder die vierte Trägerschicht oder jeweils beide gekennzeichnet ist durch eine größere Schichtdicke als die zweite Trägerschicht oder die dritte Trägerschicht oder jeweils beide; wobei in dem weiteren Verbundbereich die zweite Trägerschicht gekennzeichnet ist durch eine größere Schichtdicke als in dem ersten Verbundbereich; wobei die weitere Fixieroberfläche eine Aussparung beinhaltet; wobei sich der erste Verbundbereich und der weitere Verbundbereich jeweils mindestens teilweise zwischen der Aussparung und der ersten Fixieroberfläche befinden. Das Beispiel 1 der Vorrichtung 1 ist Gegenstand des Anspruchs 1.

Ein Beispiel 2 der Offenbarung der Vorrichtung 1 ist nach dem Beispiel 1 ausgestaltet, wobei die erste Verbundschicht als erste Verbundschichtfolge in Richtung von der weiteren Fixieroberfläche zu der ersten Fixieroberfläche die erste Trägerschicht und eine erste Barriereschicht beinhaltet; wobei die zweite Verbundschicht als zweite Verbundschichtfolge in Richtung von der weiteren Fixieroberfläche zu der ersten Fixieroberfläche eine zweite Barriereschicht und die zweite Trägerschicht beinhaltet; wobei die dritte Verbundschicht als dritte Verbundschichtfolge in Richtung von der weiteren Fixieroberfläche zu der ersten Fixieroberfläche die dritte Trägerschicht und eine dritte Barriereschicht beinhaltet; wobei die vierte Verbundschicht als vierte Verbundschichtfolge in Richtung von der weiteren Fixieroberfläche zu der ersten Fixieroberfläche eine vierte Barriereschicht und die vierte Trägerschicht beinhaltet. Das Beispiel 2 der Vorrichtung 1 ist Gegenstand des abhängigen Anspruchs 2.

Ein Beispiel 3 der Offenbarung der Vorrichtung 1 ist nach einem der vorhergehenden Beispiele ausgestaltet, wobei das erste Fixierelement oder das weitere Fixierelement oder beide eine Sonotrode ist. Bevorzugt ist das erste Fixierelemente eine Sonotrode. In diesem Fall ist das weitere Fixierelement bevorzugt ein Amboss zu der Sonotrode. Wird die erfindungsgemäße Vorrichtung in einem kontinuierlichen Prozess eingesetzt, sind bevorzugt das erste Fixierelement und das weitere Fixierelement Sonotroden. Das Beispiel 3 der Vorrichtung 1 ist Gegenstand des abhängigen Anspruchs 3, wobei der Anspruch nicht auf die hier als weitergehend bevorzugt gelehrten Merkmale eingeschränkt ist.

Ein Beispiel 4 der Offenbarung der Vorrichtung 1 ist nach dem Beispiel 3 ausgestaltet, wobei die Sonotrode eines ausgewählt aus der Gruppe bestehend aus einer Legierung, beinhaltend zu mindestens 90 Gew.-%, bevorzugt mindestens 93 Gew.-%, bevorzugter mindestens 95 Gew.-%, Titan oder Aluminium oder beides, bezogen auf das Gewicht der Legierung; einem Stahl; und einer Piezokeramik oder eine Kombination aus mindestens zwei davon beinhaltet; bevorzugt daraus besteht. Ein bevorzugter Stahl ist ein Sinterstahl. Das Beispiel 4 der Vorrichtung 1 ist Gegenstand des abhängigen Anspruchs 4, wobei der Anspruch nicht auf die hier als weitergehend bevorzugt gelehrten Merkmale eingeschränkt ist.

Ein Beispiel 5 der Offenbarung der Vorrichtung 1 ist nach einem der vorhergehenden Beispiele ausgestaltet, wobei der erste Verbundbereich gekennzeichnet ist durch eine erste Breite; wobei die erste Breite in einem Bereich von 1 bis 10 mm, bevorzugt von 2 bis 9 mm, bevorzugter von 3 bis 8 mm, bevorzugter von 3 bis 7 mm, am bevorzugtesten von 4 bis 6,5 mm, liegt. Das Beispiel 5 der Vorrichtung 1 ist Gegenstand des abhängigen Anspruchs 5, wobei der Anspruch nicht auf die hier als weitergehend bevorzugt gelehrten Merkmale eingeschränkt ist.

Ein Beispiel 6 der Offenbarung der Vorrichtung 1 ist nach einem der vorhergehenden Beispiele ausgestaltet, wobei der weitere Verbundbereich gekennzeichnet ist durch eine weitere Breite; wobei die weitere Breite in einem Bereich von 1 bis 10 mm, bevorzugt von 2 bis 9 mm, bevorzugter von 3 bis 8 mm, bevorzugter von 3 bis 7 mm, am bevorzugtesten von 4 bis 6,5 mm, liegt. Das Beispiel 6 der Vorrichtung 1 ist Gegenstand des abhängigen Anspruchs 6, wobei der Anspruch nicht auf die hier als weitergehend bevorzugt gelehrten Merkmale eingeschränkt ist.

Ein Beispiel 7 der Offenbarung der Vorrichtung 1 ist nach einem der vorhergehenden Beispiele ausgestaltet, wobei die Aussparung eine Länge in Richtung eines Umfangs des weiteren Fixierelements hat; wobei eine Breite der Aussparung entlang des Umfangs weniger wird. Das Beispiel 7 liegt im Schutzumfang des Anspruchs 1, ist selbst jedoch nicht Gegenstand eines Anspruchs.

Ein Beispiel 8 der Offenbarung der Vorrichtung 1 ist nach einem der vorhergehenden Beispiele ausgestaltet, wobei die Aussparung auf einander gegenüberliegenden Seiten der Aussparung durch einen ersten Rand und einen weiteren Rand begrenzt ist; wobei der erste Rand einen geraden ersten Randabschnitt beinhaltet; wobei der weitere Rand einen geraden weiteren Randabschnitt beinhaltet; wobei der gerade erste Randabschnitt und der gerade weitere Randabschnitt einen Winkel in einem Bereich von 5 bis 30°, bevorzugt von 5 bis 25°, bevorzugter von 5 bis 20°, am bevorzugtesten von 10 bis 20°, einschließen. Das Beispiel 8 liegt im Schutzumfang des Anspruchs 1, ist selbst jedoch nicht Gegenstand eines Anspruchs.

Ein Beispiel 9 der Offenbarung der Vorrichtung 1 ist nach einem der vorhergehenden Beispiele ausgestaltet, wobei in dem ersten Verbundbereich die Schichtdicke der ersten Trägerschicht oder der vierten Trägerschicht oder beider jeweils 1,1 bis 20 mal, bevorzugt 1,1 bis 15 mal, bevorzugter 1,1 bis 10 mal, bevorzugter 1,1 bis 5 mal, bevorzugter 1,1 bis 3 mal, bevorzugter 1,1 bis 2,5 mal, bevorzugter 1,2 bis 2,4 mal, noch bevorzugter 1,2 bis 2,4 mal, am bevorzugtesten 1,3 bis 2,3 mal, so groß ist wie die Schichtdicke der zweiten Trägerschicht oder der dritten Trägerschicht oder jeweils beider. Das Beispiel 9 liegt im Schutzumfang des Anspruchs 1, ist selbst jedoch nicht Gegenstand eines Anspruchs.

Ein Beispiel 10 der Offenbarung der Vorrichtung 1 ist nach einem der vorhergehenden Beispiele ausgestaltet, wobei in dem weiteren Verbundbereich die Schichtdicke der zweiten Trägerschicht 1,1 bis 20 mal, bevorzugt 1,1 bis 15 mal, bevorzugter 1,1 bis 10 mal, bevorzugter 1,1 bis 5 mal, bevorzugter 1,1 bis 3 mal, bevorzugter 1,1 bis 2,5 mal, bevorzugter 1,2 bis 2,4 mal, noch bevorzugter 1,2 bis 2,4 mal, am bevorzugtesten 1,3 bis 2,3 mal, so groß ist wie die Schichtdicke dieser zweiten Trägerschicht in dem ersten Verbundbereich. Das Beispiel 10 liegt im Schutzumfang des Anspruchs 1, ist selbst jedoch nicht Gegenstand eines Anspruchs.

Ein Beispiel 11 der Offenbarung der Vorrichtung 1 ist nach einem der vorhergehenden Beispiele ausgestaltet, wobei in dem ersten Verbundbereich die zweite Verbundschicht mit der dritten Verbundschicht nicht verbunden ist. Bevorzugt sind die zweite Verbundschicht und die dritte Verbundschicht in dem ersten Verbundbereich kontaktiert, aber nicht verbunden. Bevorzugt sind in dem ersten Verbundbereich mindestens 20 %, bevorzugter mindestens 30 %, bevorzugter mindestens 40 %, bevorzugter mindestens 50 %, bevorzugter mindestens 60 %, bevorzugter mindestens 70 %, noch bevorzugter mindestens 80 %, noch bevorzugter mindestens 90 %, am bevorzugtesten mindestens 95 %, einer der dritten Verbundschicht zugewandten Oberfläche der zweiten Verbundschicht mit der dritten Verbundschicht kontaktiert, und bevorzugt nicht verbunden. Weiter bevorzugt werden die zweite Verbundschicht und die dritte Verbundschicht dadurch aneinandergehalten, dass sie in mindestens einem an den ersten Verbundbereich angrenzenden Verbundbereich miteinander verbunden sind. Bevorzugt geht die zweite Verbundschicht in vorstehend genanntem angrenzenden Verbundbereich an einer Faltung in die dritte Verbundschicht über. In dem ersten Verbundbereich kann die zweite Verbundschicht mit der dritten Verbundschicht in einem weiteren Beispiel auch weder verbunden, noch kontaktiert sein. In einem weiteren Beispiel sind die zweite Verbundschicht und die dritte Verbundschicht in dem ersten Verbundbereich miteinander verbunden, bevorzugt auf mindestens 20 %, bevorzugter mindestens 30 %, bevorzugter mindestens 40 %, bevorzugter mindestens 50 %, bevorzugter mindestens 60 %, bevorzugter mindestens 70 %, noch bevorzugter mindestens 80 %, noch bevorzugter mindestens 90 %, am bevorzugtesten mindestens 95 %, einer der dritten Verbundschicht zugewandten Oberfläche der zweiten Verbundschicht. Dabei sind die zweite Verbundschicht und die dritte Verbundschicht in dem ersten Verbundbereich bevorzugt miteinander verpresst oder gesiegelt oder beides. Das Beispiel 11 liegt im Schutzumfang des Anspruchs 1, ist selbst jedoch nicht Gegenstand eines Anspruchs.

Ein Beispiel 12 der Offenbarung der Vorrichtung 1 ist nach einem der vorhergehenden Beispiele ausgestaltet, wobei in dem ersten Verbundbereich
a) eine der dritten Trägerschicht zugewandte Oberfläche der zweiten Trägerschicht, und
b) eine der zweiten Trägerschicht zugewandte Oberfläche der dritten Trägerschicht
jeweils keine Deckschicht, bevorzugt keinen "Strich", beinhaltet und mit keiner Deckschicht, bevorzugt keinem "Strich", verbunden ist. Das Beispiel 12 liegt im Schutzumfang des Anspruchs 1, ist selbst jedoch nicht Gegenstand eines Anspruchs.

Ein Beispiel 13 der Offenbarung der Vorrichtung 1 ist nach einem der vorhergehenden Beispiele ausgestaltet, wobei eine ausgewählt aus der Gruppe bestehend aus der ersten Trägerschicht, der zweiten Trägerschicht, der dritten Trägerschicht und der vierten Trägerschicht, oder eine Kombination aus mindestens zwei davon eines ausgewählt aus der Gruppe bestehend aus Karton, Pappe, und Papier oder eine Kombination aus mindestens zwei davon beinhaltet. Bevorzugt besteht eine ausgewählt aus der Gruppe bestehend aus der ersten Trägerschicht, der zweiten Trägerschicht, der dritten Trägerschicht und der vierten Trägerschicht, oder eine Kombination aus mindestens zwei davon aus einem ausgewählt aus der Gruppe bestehend aus Karton, Pappe, und Papier oder einer Kombination aus mindestens zwei davon. Das Beispiel 13 liegt im Schutzumfang des Anspruchs 1, ist selbst jedoch nicht Gegenstand eines Anspruchs.

Ein Beispiel 14 der Offenbarung der Vorrichtung 1 ist nach einem der Beispiele 2 bis 13 ausgestaltet, wobei eine ausgewählt aus der Gruppe bestehend aus der ersten Barriereschicht, der zweiten Barriereschicht, der dritten Barriereschicht und der vierten Barriereschicht, oder eine Kombination aus mindestens zwei davon Aluminium oder einen Barrierekunststoff oder beides beinhaltet. Bevorzugt besteht eine ausgewählt aus der Gruppe bestehend aus der ersten Barriereschicht, der zweiten Barriereschicht, der dritten Barriereschicht und der vierten Barriereschicht, oder eine Kombination aus mindestens zwei davon aus Aluminium oder einem Barrierekunststoff oder beidem. Das Beispiel 14 liegt im Schutzumfang des Anspruchs 1, ist selbst jedoch nicht Gegenstand eines Anspruchs.

Ein Beispiel 15 der Offenbarung der Vorrichtung 1 ist nach einem der vorhergehenden Beispiele ausgestaltet, wobei der gefaltete flächenförmige Verbund ein Behältervorläufer, umgebend einen Innenraum, ist. Das Beispiel 15 liegt im Schutzumfang des Anspruchs 1, ist selbst jedoch nicht Gegenstand eines Anspruchs.

Ein Beispiel 16 der Offenbarung der Vorrichtung 1 ist nach dem Beispiel 15 ausgestaltet, wobei der Behältervorläufer ein Nahrungsmittel beinhaltet. Das Beispiel 16 liegt im Schutzumfang des Anspruchs 1, ist selbst jedoch nicht Gegenstand eines Anspruchs.

Ein Beispiel 17 der Offenbarung der Vorrichtung 1 ist nach einem der vorhergehenden Beispiele ausgestaltet, wobei der gefaltete flächenförmige Verbund einstückig ausgebildet ist. Das Beispiel 17 liegt im Schutzumfang des Anspruchs 1, ist selbst jedoch nicht Gegenstand eines Anspruchs.

Ein Beispiel 18 der Offenbarung der Vorrichtung 1 ist nach einem der vorhergehenden Beispiele ausgestaltet, wobei die Aussparung eine Tiefe in einem Bereich von 0,1 bis 5 mm, bevorzugt von 0,1 bis 4 mm, bevorzugter von 0,1 bis 3 mm, bevorzugter von 0,1 bis 2 mm, bevorzugter von 0,1 bis 1 mm, am bevorzugtesten von 0,2 bis 0,5 mm, hat. Das Beispiel 18 der Vorrichtung 1 ist Gegenstand des abhängigen Anspruchs 7, wobei der Anspruch nicht auf die hier als weitergehend bevorzugt gelehrten Merkmale eingeschränkt ist.

Einen Beitrag zur Erfüllung mindestens einer der erfindungsgemäßen Aufgaben leistet ein Beispiel 1 einer Offenbarung eines Verfahrens 1 beinhaltend als Verfahrensschritte
a) Bereitstellen eines gefalteten flächenförmigen Verbunds,
   wobei der gefaltete flächenförmige Verbund eine erste Verbundschicht, eine zweite Verbundschicht, eine dritte Verbundschicht, eine vierte Verbundschicht, einen ersten Verbundbereich und einen weiteren Verbundbereich beinhaltet;
   wobei sich zwischen der ersten Verbundschicht und der zweiten Verbundschicht ein Zwischenbereich befindet;
   wobei die erste Verbundschicht eine erste Trägerschicht beinhaltet;
   wobei die zweite Verbundschicht eine zweite Trägerschicht beinhaltet;
   wobei die dritte Verbundschicht eine dritte Trägerschicht beinhaltet;
   wobei die vierte Verbundschicht eine vierte Trägerschicht beinhaltet;
   wobei der erste Verbundbereich eine erste Schichtfolge, beinhaltend als einander überlagernde Schichten in Richtung von dem Zwischenbereich durch die erste Schichtfolge die zweite Verbundschicht, die dritte Verbundschicht und die vierte Verbundschicht beinhaltet;
   wobei in dem ersten Verbundbereich die dritte Verbundschicht mit der vierten Verbundschicht verbunden ist;
   wobei in dem ersten Verbundbereich die erste Trägerschicht oder die vierte Trägerschicht oder jeweils beide gekennzeichnet ist durch eine größere Schichtdicke als die zweite Trägerschicht oder die dritte Trägerschicht oder jeweils beide;
   wobei der weitere Verbundbereich eine weitere Schichtfolge, beinhaltend als einander überlagernde Schichten in Richtung von dem Zwischenbereich durch die weitere Schichtfolge die zweite Verbundschicht und die vierte Verbundschicht beinhaltet;
   wobei in dem weiteren Verbundbereich die zweite Verbundschicht mit der vierten Verbundschicht verbunden ist;
   wobei in dem weiteren Verbundbereich die zweite Trägerschicht gekennzeichnet ist durch eine größere Schichtdicke als in dem ersten Verbundbereich;
b) Bereitstellen eines ersten Fixierelements, beinhaltend eine erste Fixieroberfläche, und eines weiteren Fixierelements, beinhaltend eine weitere Fixieroberfläche;
   wobei die weitere Fixieroberfläche eine Aussparung beinhaltet;
c) Kontaktieren der vierten Verbundschicht mit der ersten Fixieroberfläche, der ersten Verbundschicht mit der weiteren Fixieroberfläche, und der ersten Verbundschicht mit der zweiten Verbundschicht;
   wobei sich der erste Verbundbereich und der weitere Verbundbereich jeweils mindestens teilweise zwischen der Aussparung und der ersten Fixieroberfläche befinden; und
d) Verbinden der ersten Verbundschicht mit der zweiten Verbundschicht.
Das Beispiel 1 des Verfahrens 1 ist Gegenstand des Anspruchs 8.

Ein Beispiel 2 der Offenbarung des Verfahrens 1 ist nach dem Beispiel 1 ausgestaltet, wobei in Verfahrensschritt d) die erste Fixieroberfläche oder die weitere Fixieroberfläche oder beide gegen den flächenförmigen Verbund mit
a) einer Frequenz in einem Bereich von 10 bis 50 kHz, bevorzugt von 10 bis 45 kHz, bevorzugter von 10 bis 40 kHz, bevorzugter von 15 bis 35 kHz, am bevorzugtesten von 20 bis 35 kHz, oder
b) einer Amplitude in einem Bereich von 3 bis 20 µm, bevorzugt von 4 bis 18 µm, bevorzugter von 5 bis 16 µm, bevorzugter von 6 bis 15 µm, am bevorzugtesten von 6,5 bis 13,3 µm, oder
c) beidem
schwingt. Bevorzugt trifft das obige Merkmal a) oder b) oder c) auf das erste Fixierelement zu. Bevorzugt ist das erste Fixierelement eine Sonotrode. Das Beispiel 2 des Verfahrens 1 ist Gegenstand des abhängigen Anspruchs 9, wobei der Anspruch nicht auf die hier als weitergehend bevorzugt gelehrten Merkmale eingeschränkt ist.

Ein Beispiel 3 der Offenbarung des Verfahrens 1 ist nach dem Beispiel 1 oder 2 ausgestaltet, wobei in Verfahrensschritt d) das Verbinden ein Siegeln durch ein Übertragen einer Ultraschallschwingung von dem ersten Fixierelement oder dem weiteren Fixierelement oder beiden auf den gefalteten flächenförmigen Verbund ist. Das Beispiel 3 des Verfahrens 1 ist Gegenstand des abhängigen Anspruchs 10, wobei der Anspruch nicht auf die hier als weitergehend bevorzugt gelehrten Merkmale eingeschränkt ist.

Ein Beispiel 4 der Offenbarung des Verfahrens 1 ist nach dem Beispiel 3 ausgestaltet, wobei die Ultraschallschwingung für eine Dauer in einem Bereich von 50 bis 500 ms, bevorzugt von 70 bis 460 ms, bevorzugter von 90 bis 420 ms, bevorzugter von 110 bis 360 ms, bevorzugter von 130 bis 320 ms, bevorzugter von 150 bis 280 ms, bevorzugter von 160 bis 240 ms, am bevorzugtesten von 180 bis 220 ms, angeregt wird. Das Beispiel 4 des Verfahrens 1 ist Gegenstand des abhängigen Anspruchs 11, wobei der Anspruch nicht auf die hier als weitergehend bevorzugt gelehrten Merkmale eingeschränkt ist.

Ein Beispiel 5 der Offenbarung des Verfahrens 1 ist nach einem der vorhergehenden Beispiele ausgestaltet, wobei in Verfahrensschritt a) der gefaltete flächenförmige Verbund ein Behältervorläufer ist, wobei in Verfahrensschritt d) das Verbinden ein Verschließen des Behältervorläufers ist. Das Beispiel 5 des Verfahrens 1 ist Gegenstand des abhängigen Anspruchs 12, wobei der Anspruch nicht auf die hier als weitergehend bevorzugt gelehrten Merkmale eingeschränkt ist.

Ein Beispiel 6 der Offenbarung des Verfahrens 1 ist nach dem Beispiel 5 ausgestaltet, wobei vor Verfahrensschritt c) ein Nahrungsmittel in den Behältervorläufer eingebracht wird. Das Beispiel 6 liegt im Schutzumfang des Anspruchs 8, ist selbst jedoch nicht Gegenstand eines Anspruchs.

Ein Beispiel 7 der Offenbarung des Verfahrens 1 ist nach dem Beispiel 5 oder 6 ausgestaltet, wobei in Verfahrensschritt d) ein geschlossener Behälter erhalten wird, wobei der geschlossene Behälter autoklaviert oder pasteurisiert oder beides wird. Das Beispiel 7 liegt im Schutzumfang des Anspruchs 8, ist selbst jedoch nicht Gegenstand eines Anspruchs.

Ein Beispiel 8 der Offenbarung des Verfahrens 1 ist nach einem der Beispiele 5 bis 7 ausgestaltet, wobei vor Verfahrensschritt c) der Behältervorläufer sterilisiert wird. Ein bevorzugtes Sterilisieren erfolgt durch Kontaktieren mit gasförmigem Wasserstoffperoxid oder flüssigem Wasserstoffperoxid oder beidem. Ein bevorzugtes Kontaktieren ist hierbei eines ausgewählt aus der Gruppe bestehend aus einem Eintauchen, einem Spülen, und einem Besprühen, oder eine Kombination aus mindestens zwei davon. Das Beispiel 8 liegt im Schutzumfang des Anspruchs 8, ist selbst jedoch nicht Gegenstand eines Anspruchs.

Ein Beispiel 9 der Offenbarung des Verfahrens 1 ist nach einem der vorhergehenden Beispiele ausgestaltet, wobei in Verfahrensschritt a) das Bereitstellen beinhaltet
i) ein Bereitstellen eines flächenförmigen Verbunds, beinhaltend
   A) eine Schichtfolge, beinhaltend
      I) eine Verbundträgerschicht, und
      II) eine Verbundbarriereschicht,
   B) einen Randbereich, und
   C) einen Innenbereich, angrenzend an den Randbereich;
ii) Verringern einer Schichtdicke der Verbundträgerschicht in dem Randbereich;
iii) Erzeugen einer Faltung in dem Randbereich unter Erhalten eines ersten Randfaltbereichs und eines weiteren Randfaltbereichs,
   wobei der erste Randfaltbereich und der weitere Randfaltbereich entlang der Faltung aneinander angrenzen;
iv) Kontaktieren einer Oberfläche des ersten Randfaltbereichs mit einer Oberfläche des weiteren Randfaltbereichs;
v) Erzeugen einer weiteren Faltung in dem Innenbereich unter Erhalten eines ersten Verbundfaltbereichs und eines weiteren Verbundfaltbereichs,
   wobei der weitere Verbundfaltbereich den Randbereich und einen Teil des Innenbereichs beinhaltet;
vi) Verbinden des ersten Verbundfaltbereichs mit dem weiteren Randfaltbereich und dem Teil des Innenbereichs.

Das Beispiel 9 liegt im Schutzumfang des Anspruchs 8, ist selbst jedoch nicht Gegenstand eines Anspruchs.

Ein Beispiel 10 der Offenbarung des Verfahrens 1 ist nach dem Beispiel 9 ausgestaltet, wobei in Verfahrensschritt ii) das Verringern ein Schälen der Verbundträgerschicht ist. Das Beispiel 10 liegt im Schutzumfang des Anspruchs 8, ist selbst jedoch nicht Gegenstand eines Anspruchs.

Ein Beispiel 11 der Offenbarung des Verfahrens 1 ist nach dem Beispiel 10 ausgestaltet, wobei das Schälen durch ein rotierendes Werkzeug erfolgt. Das Beispiel 11 liegt im Schutzumfang des Anspruchs 8, ist selbst jedoch nicht Gegenstand eines Anspruchs.

Ein Beispiel 12 der Offenbarung des Verfahrens 1 ist nach einem der Beispiele 9 bis 11 ausgestaltet, wobei in Verfahrensschritt i) der flächenförmige Verbund eine Rillung beinhaltet, wobei in Verfahrensschritt v) das Erzeugen der weiteren Faltung ein Falten entlang der Rillung beinhaltet. Das Beispiel 12 liegt im Schutzumfang des Anspruchs 8, ist selbst jedoch nicht Gegenstand eines Anspruchs.

Ein Beispiel 1 eines geschlossenen Behälters 1 ist erhältlich durch das Verfahren 1 nach einem seiner Beispiele 1 bis 12.

Offenbart wird ferner ein Beispiel 1 eines geschlossenen Behälters 2, umgebend einen Innenraum, wobei der geschlossene Behälter einen gefalteten flächenförmigen Verbund beinhaltet, wobei der gefaltete flächenförmige Verbund einen ersten Nahtbereich und einen weiteren Nahtbereich beinhaltet, wobei der erste Nahtbereich entlang einer Naht mit dem weiteren Nahtbereich verbunden ist, wobei der erste Nahtbereich oder der weitere Nahtbereich oder beide entlang der Naht eine Vertiefung aufweist.

Ein Beispiel 2 des geschlossenen Behälters 2 ist nach dem Beispiel 1 ausgestaltet, wobei der weitere Nahtbereich eine erste Verbundschicht beinhaltet, wobei der erste Nahtbereich, eine zweite Verbundschicht, eine dritte Verbundschicht, eine vierte Verbundschicht, einen ersten Verbundbereich und einen weiteren Verbundbereich beinhaltet; wobei sich zwischen der ersten Verbundschicht und der zweiten Verbundschicht die Naht befindet; wobei die erste Verbundschicht eine erste Trägerschicht beinhaltet; wobei die zweite Verbundschicht eine zweite Trägerschicht beinhaltet; wobei die dritte Verbundschicht eine dritte Trägerschicht beinhaltet; wobei die vierte Verbundschicht eine vierte Trägerschicht beinhaltet; wobei der erste Verbundbereich eine erste Schichtfolge, beinhaltend als einander überlagernde Schichten in Richtung von der Naht durch die erste Schichtfolge die zweite Verbundschicht, die dritte Verbundschicht und die vierte Verbundschicht beinhaltet; wobei in dem ersten Verbundbereich die dritte Verbundschicht mit der vierten Verbundschicht verbunden ist; wobei in dem ersten Verbundbereich die vierte Trägerschicht gekennzeichnet ist durch eine größere Schichtdicke als die zweite Trägerschicht oder die dritte Trägerschicht oder jeweils beide; wobei der weitere Verbundbereich eine weitere Schichtfolge, beinhaltend als einander überlagernde Schichten in Richtung von der Naht durch die weitere Schichtfolge die zweite Verbundschicht und die vierte Verbundschicht beinhaltet; wobei in dem weiteren Verbundbereich die zweite Verbundschicht mit der vierten Verbundschicht verbunden ist; wobei in dem weiteren Verbundbereich die zweite Trägerschicht gekennzeichnet ist durch eine größere Schichtdicke als in dem ersten Verbundbereich; wobei der weitere Verbundbereich an den ersten Verbundbereich angrenzt.

Ein Beispiel 3 des geschlossenen Behälters 2 ist nach dem Beispiel 1 oder 2 ausgestaltet, wobei der gefaltete flächenförmige Verbund den Innenraum allseitig umgibt, wobei der gefaltete flächenförmige Verbund einstückig ausgebildet ist.

Ein Beispiel 4 des geschlossenen Behälters 2 ist nach einem der Beispiele 1 bis 3 ausgestaltet, wobei eine Trägerschicht des gefalteten flächenförmigen Verbunds ein Loch beinhaltet, wobei das Loch mindestens mit einer Barriereschicht des gefalteten flächenförmigen Verbunds als Lochdeckschicht überdeckt ist. Bevorzugt ist das Loch weiter durch eine Öffnungshilfe überdeckt, wobei die Öffnungshilfe ausgebildet ist zum Öffnen des geschlossenen Behälters in einem Bereich des Lochs.

Einen Beitrag zur Erfüllung mindestens einer der erfindungsgemäßen Aufgaben leistet ein Beispiel 1 einer Offenbarung einer Verwendung 1 der Vorrichtung 1 nach einem ihrer Beispiele 1 bis 18 zu einem Verbinden der ersten Verbundschicht mit der zweiten Verbundschicht. Bezogen auf die Beispiele 1 bis 6 und 18 der Vorrichtung 1 ist das Beispiel 1 der Verwendung 1 Gegenstand des Anspruchs 13.

Bevorzugte Ausgestaltungen von Bestandteilen der erfindungsgemäßen Vorrichtung sind ebenfalls als Ausgestaltungen gleichnamiger oder entsprechender Bestandteile im erfindungsgemäßen Verfahren und im erfindungsgemäßen geschlossenen Behälter bevorzugt. Ferner sind bevorzugte Ausgestaltungen von im erfindungsgemäßen Verfahren verwendeter Bestandteile sowie Bestandteile des erfindungsgemäßen geschlossenen Behälters ebenso für gleichnamige oder entsprechende Bestandteile der erfindungsgemäßen Vorrichtung bevorzugt.

### Schichten

Zwei Schichten sind miteinander verbunden, wenn ihre Haftung aneinander über Van-der-Waals Anziehungskräfte hinausgeht. Miteinander verbundene Schichten sind bevorzugt eines ausgewählt aus der Gruppe bestehend aus miteinander versiegelt, miteinander verklebt, und miteinander verpresst, oder eine Kombination aus mindestens zwei davon. Sofern nicht anders angegeben können in einer Schichtfolge die Schichten mittelbar, das heißt mit einer oder mindestens zwei Zwischenschichten, oder unmittelbar, das heißt ohne Zwischenschicht, aufeinander folgen. Dies ist insbesondere der Fall bei der Formulierung, in der eine Schicht eine andere Schicht überlagert. Eine Formulierung, in der eine Schichtfolge aufgezählte Schichten beinhaltet, bedeutet, dass zumindest die angegebenen Schichten in der angegebenen Reihenfolge vorliegen. Diese Formulierung besagt nicht zwingend, dass diese Schichten unmittelbar aufeinander folgen. Eine Formulierung, in der zwei Schichten aneinander angrenzen, besagt, dass diese beiden Schichten unmittelbar und somit ohne Zwischenschicht aufeinanderfolgen. Diese Formulierung sagt jedoch nichts darüber aus, ob die beiden Schichten miteinander verbunden sind oder nicht. Vielmehr können diese beiden Schichten miteinander in Kontakt sein.

### Verbinden

Ein bevorzugtes Verbinden ist eines ausgewählt aus der Gruppe bestehend aus einem Siegeln, einem Kleben, und einem Verpressen, oder eine Kombination aus mindestens zwei davon. Im Fall des Siegelns wird die Verbindung mittels einer Flüssigkeit und deren Erstarren geschaffen. Im Fall des Klebens bilden sich zwischen den Grenzflächen oder Oberflächen der beiden zu verbindenden Gegenstände chemische Bindungen aus, die die Verbindung schaffen. Häufig ist es beim Siegeln oder Kleben vorteilhaft, die zu siegelnden bzw. klebenden Flächen miteinander zu verpressen. Ein bevorzugtes Verpressen zweier Schichten ist ein Aufeinanderpressen jeweils einer ersten Oberfläche einer ersten der beiden Schichten auf eine der ersten Oberfläche zugwandten zweiten Oberfläche der zweiten der beiden Schichten über mindestens 20 %, bevorzugt mindestens 30 %, bevorzugter mindestens 40 %, bevorzugter mindestens 50 %, bevorzugter mindestens 60 %, bevorzugter mindestens 70 %, noch bevorzugter mindestens 80 %, noch bevorzugter mindestens 90 %, am bevorzugtesten mindestens 95 %, der ersten Oberfläche. Ein besonders bevorzugtes Verbinden ist ein Siegeln. Ein bevorzugtes Siegeln beinhaltet als Schritte ein Aufeinanderlegen, ein Erwärmen und ein Verpressen, wobei die Schritte bevorzugt in dieser Abfolge erfolgen. Eine andere Abfolge ist ebenfalls denkbar, insbesondere die Abfolge Erwärmen, Aufeinanderlegen und Verpressen. Ein bevorzugtes Erwärmen ist ein Erwärmen einer Polymerschicht, bevorzugt einer thermoplastischen Schicht, bevorzugter einer Polyethylenschicht oder einer Polypropylenschicht oder beider. Ein weiteres bevorzugtes Erwärmen ist ein Erwärmen einer Polyethylenschicht auf eine Temperatur in einem Bereich von 80 bis 140°C, bevorzugter von 90 bis 130°C, am bevorzugtesten von 100 bis 120°C. Ein weiteres bevorzugtes Erwärmen ist ein Erwärmen einer Polypropylenschicht auf eine Temperatur in einem Bereich von 120 bis 200°C, bevorzugter von 130 bis 180°C, am bevorzugtesten von 140 bis 170°C. Ein weiteres bevorzugtes Erwärmen erfolgt auf eine Siegeltemperatur der Polymerschicht. Ein bevorzugtes Erwärmen kann durch Strahlung, durch Heißgas, durch einen Feststoffwärmekontakt, durch mechanische Schwingungen, bevorzugt durch Ultraschall, durch Konvektion, oder durch eine Kombination von mindestens zwei dieser Maßnahmen erfolgen. Ein besonders bevorzugtes Erwärmen erfolgt durch Anregen einer Ultraschallschwingung.

### Kontaktieren

Ein bevorzugtes Kontaktieren ist ein Aufeinanderpressen.

### Deckschicht

Eine bevorzugte Deckschicht ist ein "Strich". Ein "Strich" ist in der Papierherstellung eine Deckschicht, welche anorganische Feststoffpartikel, bevorzugt Pigmente und Additive beinhaltet. Der "Strich" wird bevorzugt als flüssige Phase, vorzugsweise als Suspension oder Dispersion, auf eine Oberfläche einer papier- oder kartonhaltigen Schicht aufgebracht. Eine bevorzugte Dispersion ist eine wässrige Dispersion. Eine bevorzugte Suspension ist eine wässrige Suspension. Eine weitere bevorzugte flüssige Phase beinhaltet anorganische Feststoffpartikel, bevorzugt Pigmente; einen Binder; und Additive. Ein bevorzugtes Pigment ist ausgewählt aus der Gruppe bestehend aus Kalziumkarbonat, Kaolin, Talkum, Silikat, einem Kunststoffpigment und Titandioxid. Ein bevorzugtes Kaolin ist ein kalziniertes Kaolin. Ein bevorzugtes Kalziumkarbonat ist eines ausgewählt aus der Gruppe bestehend aus Marmor, Kreide und einem präzipierten Kalziumkarbonat (PCC) oder eine Kombination aus mindestens zwei davon. Ein bevorzugtes Silikat ist ein Schichtsilikat. Ein bevorzugtes Kunststoffpigment ist kugelförmig, bevorzugt hohlkugelförmig. Ein bevorzugter Binder ist einer ausgewählt aus der Gruppe bestehend aus Styrol-Butadien, Acrylat, Acrylnitril, eine Stärke und ein Polyvinylalkohol oder eine Kombination aus mindestens zwei davon, wobei Acrylat bevorzugt ist. Eine bevorzugte Stärke ist eines ausgewählt aus der Gruppe bestehend aus kationisch modifiziert, anionisch modifiziert und fragmentiert oder eine Kombination aus mindestens zwei davon. Ein bevorzugtes Additiv ist eines ausgewählt aus der Gruppe bestehend aus einem Rheologiemodifizierer, einem Nuancierfarbstoff, einem optischen Aufheller, einem Träger für einen optischen Aufheller, einem Flockulierungsmittel, einem Entlüfter und einem Oberflächenenergiermodifizierer oder eine Kombination aus mindestens zwei davon. Ein bevorzugter Entlüfter ist ein Streichfarbenentlüfter, bevorzugt auf Silikonbasis oder auf Fettsäurebasis oder beides. Ein bevorzugter Oberflächenenergiemodifizierer ist ein Tensid.

### Trägerschicht

Als Trägerschicht kann jedes dem Fachmann für diesen Zweck geeignete Material eingesetzt werden, welches eine ausreichende Festigkeit und Steifigkeit aufweist, um dem erfindungsgemäßen Behälter bzw. einem Behälter aus dem erfindungsgemäßen flächenförmigen Verbund soweit Stabilität zu geben, dass der Behälter im gefüllten Zustand seine Form im Wesentlichen beibehält. Neben einer Reihe von Kunststoffen sind auf Pflanzen basierende Faserstoffe, insbesondere Zellstoffe, vorzugsweise verleimte, gebleichte und/oder ungebleichte Zellstoffe bevorzugt, wobei Papier und Karton besonders bevorzugt sind. Das Flächengewicht einer Trägerschicht, bevorzugt jeder Trägerschicht, liegt vorzugsweise in einem Bereich von 120 bis 450 g/m², besonders bevorzugt in einem Bereich von 130 bis 400 g/m² und am meisten bevorzugt in einem Bereich von 150 bis 380 g/m². Ein bevorzugter Karton weist in der Regel einen ein- oder mehrschichtigen Aufbau auf und kann ein- oder beidseitig mit einer oder auch mehreren Deckschichten beschichtet sein. Weiterhin besitzt ein bevorzugter Karton eine Restfeuchtigkeit von weniger als 20 Gew.-%, bevorzugt von 2 bis 15 Gew.-% und besonders bevorzugt von 4 bis 10 Gew.-% bezogen auf das Gesamtgewicht des Kartons. Ein besonders bevorzugter Karton weist einen mehrschichtigen Aufbau auf. Weiterhin bevorzugt besitzt der Karton auf der zur Umgebung hin weisenden Oberfläche mindestens eine, besonders bevorzugt jedoch mindestens zwei Lagen einer Deckschicht, die dem Fachmann als "Strich" bekannt ist. Weiterhin besitzt ein bevorzugter Karton einen Scott-Bond-Wert in einem Bereich von 100 bis 360 J/m², bevorzugt von 120 bis 350 J/m² und insbesondere bevorzugt von 135 bis 310 J/m². Durch die vorstehend genannten Bereiche gelingt es, einen Verbund bereitzustellen, aus dem sich ein Behälter mit hoher Dichtigkeit, leicht und in geringen Toleranzen falten lässt. Eine bevorzugte Trägerschicht beinhaltet an mindestens einer Oberfläche, bevorzugt an zwei einander gegenüberliegenden Oberflächen jeweils, eine Deckschicht. Bevorzugt beinhaltet jede Trägerschicht an jeder Oberfläche, sofern dies nicht ausdrücklich ausgeschlossen ist, eine Deckschicht. Am bevorzugtesten beinhaltet jede Trägerschicht nur an einer gegebenenfalls vorhandenen geschälten Oberfläche keine Deckschicht. Bevorzugt sind die erste Trägerschicht und die zweite Trägerschicht einstückig ausgebildet. Bevorzugter sind die erste Trägerschicht und die zweite Trägerschicht und die dritte Trägerschicht einstückig ausgebildet. Noch bevorzugter sind die erste Trägerschicht und die zweite Trägerschicht und die dritte Trägerschicht und die vierte Trägerschicht einstückig ausgebildet. Am bevorzugtesten sind alle Trägerschichten einstückig ausgebildet.

### Barriereschicht

Als Barriereschicht kann jedes dem Fachmann für diesen Zweck geeignete Material eingesetzt werden, welches eine ausreichende Barrierewirkung insbesondere gegenüber Sauerstoff aufweist. Die Barriereschicht ist bevorzugt ausgewählt aus
a. einer Kunststoffbarriereschicht;
b. einer Metallschicht;
c. einer Metalloxidschicht; oder
d. einer Kombination von mindestens zwei aus a. bis c.

Ist die Barriereschicht gemäß Alternative a. eine Kunststoffbarriereschicht, beinhaltet diese vorzugsweise mindestens 70 Gew.-%, besonders bevorzugt mindestens 80 Gew.-% und am meisten bevorzugt mindestens 95 Gew.-% mindestens eines Kunststoffs, der dem Fachmann für diesen Zweck insbesondere wegen für Verpackungsbehälter geeigneter Aroma- bzw. Gasbarriereeigenschaften bekannt ist. Als Kunststoffe, insbesondere thermoplastische Kunststoffe, kommen hier N oder O tragende Kunststoffe sowohl für sich als auch in Mischungen aus zwei oder mehr in Betracht. Erfindungsgemäß kann es sich als vorteilhaft erweisen, wenn die Kunststoffbarriereschicht eine Schmelztemperatur in einem Bereich von mehr als 155 bis 300°C, vorzugsweise in einem Bereich von 160 bis 280°C und besonders bevorzugt in einem Bereich von 170 bis 270°C besitzt.

Weiter bevorzugt weist die Kunststoffbarriereschicht ein Flächengewicht in einem Bereich von 2 bis 120 g/m², vorzugsweise in einem Bereich von 3 bis 60 g/m², besonders bevorzugt in einem Bereich von 4 bis 40 g/m² und darüber hinaus bevorzugt von 6 bis 30g/m² auf. Weiterhin bevorzugt ist die Kunststoffbarriereschicht aus Schmelzen, beispielsweise durch Extrusion, insbesondere Schichtextrusion, erhältlich. Darüber hinaus bevorzugt kann die Kunststoffbarriereschicht auch über Kaschierung in den flächenförmigen Verbund eingebracht werden. Hierbei ist es bevorzugt, dass eine Folie in den flächenförmigen Verbund eingearbeitet wird. Gemäß einer anderen Ausführungsform können auch Kunststoffbarriereschichten ausgewählt sein, die durch Abscheidung aus einer Lösung oder Dispersion von Kunststoffen erhältlich sind.

Als geeignete Polymere kommen bevorzugt solche in Frage, die ein Molekulargewicht mit einem Gewichtsmittel, bestimmt durch Gelpermeationschromatographie (GPC) mittels Lichtstreuung, in einem Bereich von 3·10³ bis 1·10⁷ g/mol, vorzugsweise in einem Bereich von 5·10³ bis 1·10⁶ g/mol und besonders bevorzugt in einem Bereich von 6·10³ bis 1·10⁵ g/mol aufweisen. Als geeignete Polymere kommen insbesondere Polyamid (PA) oder Polyethylenvinylalkohol (EVOH) oder einer Mischung daraus in Betracht.

Unter den Polyamiden kommen alle dem Fachmann für den erfindungsgemäßen Einsatz geeignet erscheinenden PAs in Frage. Besonders sind hier PA 6, PA 6.6, PA 6.10, PA 6.12, PA 11 oder PA 12 oder eine Mischung aus mindestens zwei davon zu nennen, wobei PA 6 und PA 6.6 besonders bevorzugt sind und PA 6 ferner bevorzugt ist. PA 6 ist beispielsweise unter den Handelsnamen Akulon®, Durethan® und Ultramid® kommerziell erhältlich. Darüber hinaus geeignet sind amorphe Polyamide wie z.B. MXD6, Grivory® sowie Selar® PA. Weiter bevorzugt ist es, dass das PA eine Dichte in einem Bereich von 1,01 bis 1,40 g/cm³, vorzugsweise in einem Bereich von 1,05 bis 1,30 g/cm³ und besonders bevorzugt in einem Bereich von 1,08 bis 1,25 g/cm³ aufweist. Weiterhin ist es bevorzugt, dass das PA eine Viskositätszahl in einem Bereich von 130 bis 185 ml/g und vorzugsweise in einem Bereich von 140 bis 180 ml/g.

Als EVOH kommen alle dem Fachmann für den erfindungsgemäßen Einsatz geeignet erscheinenden EVOHs in Betracht. Beispiele hierfür sind unter anderem unter den Handelsnamen EVAL™ der EVAL Europe NV, Belgien in einer Vielzahl unterschiedlicher Ausführungen kommerziell erhältlich, beispielsweise die Sorten EVAL™ F104B oder EVAL™ LR171B. Bevorzugte EVOHs besitzen mindestens eine, zwei, mehrere oder alle der folgenden Eigenschaften:
- einen Ethylengehalt in einem Bereich von 20 bis 60 mol-%, bevorzugt von 25 bis 45 mol-%;
- eine Dichte in einem Bereich von 1,0 bis 1,4 g/cm³, bevorzugt von 1,1 bis 1,3 g/cm³;
- einen Schmelzpunkt in einem Bereich von mehr als 155 bis 235°C, bevorzugt von 165 bis 225°C;
- einen MFR-Wert (210°C/2,16kg, wenn T_{S(EVOH)}<230°C; 230°C/2,16kg, wenn 210°C<T_{S(EVOH)}<230°C) in einem Bereich von 1 bis 25 g/10min, bevorzugt von 2 bis 20 g/10min;
- eine Sauerstoffpermeationsrate in einem Bereich von 0,05 bis 3,2 cm³·20µm/m²·day·atm, bevorzugt in einem Bereich von 0,1 bis 1 cm³·20µm/m²·day·atm.

Gemäß Alternative b. ist die Barriereschicht eine Metallschicht. Als Metallschicht eignen sich prinzipiell alle Schichten mit Metallen, die dem Fachmann bekannt sind und eine hohe Licht-, und Sauerstoffundurchlässigkeit schaffen können. Gemäß einer bevorzugten Ausführungsform kann die Metallschicht als Folie oder als abgeschiedene Schicht vorliegen, z.B. nach einer physikalischen Gasphasenabscheidung. Die Metallschicht ist vorzugsweise eine ununterbrochene Schicht. Gemäß einer weiteren bevorzugten Ausführungsform weist die Metallschicht eine Dicke in einem Bereich von 3 bis 20 µm, bevorzugt in einem Bereich von 3,5 bis 12 µm und besonders bevorzugt in einem Bereich von 4 bis 10 µm auf.

Bevorzugt ausgewählte Metalle sind Aluminium, Eisen oder Kupfer. Als Eisenschicht kann eine Stahlschicht, z.B. in Form einer Folie bevorzugt sein. Weiterhin bevorzugt stellt die Metallschicht eine Schicht mit Aluminium dar. Die Aluminiumschicht kann zweckmäßig aus einer Aluminiumlegierung, beispielsweise AlFeMn, AlFel,5Mn, AlFeSi oder AlFeSiMn bestehen. Die Reinheit liegt üblicherweise bei 97,5 % und höher, vorzugsweise bei 98,5 % und höher, jeweils bezogen auf die gesamte Aluminiumschicht. In einer besonderen Ausgestaltung, besteht die Metallschicht aus einer Aluminiumfolie. Geeignete Aluminiumfolien besitzen eine Dehnbarkeit von mehr als 1 %, bevorzugt von mehr als 1,3 % und besonders bevorzugt von mehr als 1,5 %, und eine Zugfestigkeit von mehr als 30 N/mm², bevorzugt mehr als 40 N/mm² und besonders bevorzugt mehr als 50 N/mm². Geeignete Aluminiumfolien zeigen im Pipettentest eine Tropfengröße von mehr als 3 mm, bevorzugt mehr als 4 mm und besonders bevorzugt von mehr als 5 mm. Geeignete Legierungen zum Erstellen von Aluminiumschichten oder - folien sind unter den Bezeichnungen EN AW 1200, EN AW 8079 oder EN AW 8111 von Hydro Aluminium Deutschland GmbH oder Amcor Flexibles Singen GmbH kommerziell erhältlich.

Im Falle einer Metallfolie als Barriereschicht kann ein- und/oder beidseitig der Metallfolie eine Haftvermittlerschicht zwischen der Metallfolie und einer nächstgelegenen Poylmerschicht vorgesehen sein. Gemäß einer besonderen Ausgestaltung des erfindungsgemäßen Behälters ist jedoch auf keiner Seite der Metallfolie, zwischen der Metallfolie und der nächstgelegenen Polymerschicht, eine Haftvermittlerschicht vorgesehen.

Weiterhin bevorzugt kann als Barriereschicht gemäß Alternative c. eine Metalloxidschicht ausgewählt sein. Als Metalloxidschichten kommen alle Metalloxidschichten in Betracht, die dem Fachmann geläufig sind und geeignet erscheinen, um eine Barrierewirkung gegenüber Licht, Dampf und/oder Gas zu erzielen. Insbesondere bevorzugt sind Metalloxidschichten basierend auf den schon zuvor genannten Metallen Aluminium, Eisen oder Kupfer, sowie solche Metalloxidschichten, die auf Titan- oder Siliziumoxidverbindungen basieren. Eine Metalloxidschicht wird beispielhaft durch Bedampfen einer Kunststoffschicht, beispielsweise eine orientierte Polypropylenfolie mit Metalloxid erzeugt. Ein bevorzugtes Verfahren hierfür ist die physikalische Gasphasenabscheidung.

Gemäß einer weiteren bevorzugten Ausführungsform kann die Metallschicht der Metalloxidschicht als Schichtenverbund aus einer oder mehrerer Kunststoffschichten mit einer Metallschicht vorliegen. Eine solche Schicht ist zum Beispiel erhältlich durch Bedampfen einer Kunststoffschicht, beispielsweise eine orientierte Polypropylenfolie, mit Metall. Ein bevorzugtes Verfahren hierfür ist die physikalische Gasphasenabscheidung.

Bevorzugt sind die erste Barriereschicht und die zweite Barriereschicht einstückig ausgebildet. Bevorzugter sind die erste Barriereschicht und die zweite Barriereschicht und die dritte Barriereschicht einstückig ausgebildet. Noch bevorzugter sind die erste Barriereschicht und die zweite Barriereschicht und die dritte Barriereschicht und die vierte Barriereschicht einstückig ausgebildet. Am bevorzugtesten sind alle Barriereschichten einstückig ausgebildet.

### Polymerschichten

Bevorzugt befindet sich zwischen der ersten Trägerschicht und der ersten Barriereschicht, ebenfalls bevorzugt zwischen der zweiten Trägreschicht und der zweiten Barriereschicht, ebenfalls bevorzugt der dritten Trägerschicht und der dritten Barriereschicht, ebenfalls bevorzugt der vierten Trägerschicht und der vierten Barriereschicht, jeweils eine Polymerschicht. Weiterhin bevorzugt ist die erste Barriereschicht auf einer der ersten Trägerschicht abgewandten Seite durch eine Polymerschicht überlagert, vorzugsweise mit der Polymerschicht verbunden. Weiterhin bevorzugt ist die zweite Barriereschicht auf einer der zweiten Trägerschicht abgewandten Seite durch eine Polymerschicht überlagert, vorzugsweise mit der Polymerschicht verbunden. Weiterhin bevorzugt ist die dritte Barriereschicht auf einer der dritten Trägerschicht abgewandten Seite durch eine Polymerschicht überlagert, vorzugsweise mit der Polymerschicht verbunden. Weiterhin bevorzugt ist die vierte Barriereschicht auf einer der vierten Trägerschicht abgewandten Seite durch eine Polymerschicht überlagert, vorzugsweise mit der Polymerschicht verbunden. Weiter bevorzugt ist die erste Trägerschicht auf einer der ersten Barriereschicht abgewandten Seite durch eine Polymerschicht überlagert, vorzugsweise mit der Polymerschicht verbunden. Weiter bevorzugt ist die zweite Trägerschicht auf einer der zweiten Barriereschicht abgewandten Seite durch eine Polymerschicht überlagert, vorzugsweise mit der Polymerschicht verbunden, wobei die zweite Trägerschicht vorzugsweise in dem zweiten Verbundbereich auf der der zweiten Barriereschicht abgewandten Seite nicht mit der Polymerschicht verbunden ist und nicht von der Polymerschicht überlagert ist. Weiter bevorzugt ist die dritte Trägerschicht auf einer der dritten Barriereschicht abgewandten Seite durch eine Polymerschicht überlagert, vorzugsweise mit der Polymerschicht verbunden, wobei die dritte Trägerschicht vorzugsweise in dem ersten Verbundbereich, dem zweiten Verbundbereich und dem dritten Verbundbereich auf der der dritten Barriereschicht abgewandten Seite nicht mit der Polymerschicht verbunden und nicht von der Polymerschicht überlagert ist. Weiter bevorzugt ist die vierte Trägerschicht auf einer der vierten Barriereschicht abgewandten Seite durch eine Polymerschicht überlagert, vorzugsweise mit der Polymerschicht verbunden.

Jede Polymerschicht kann weitere Bestandteile aufweisen. Diese Polymerschichten werden bevorzugt in einem Extrudierverfahren in die Schichtfolge ein- bzw. aufgebracht. Die weiteren Bestandteile der Polymerschichten sind bevorzugt Bestandteile, die das Verhalten der Polymerschmelze beim Auftragen als Schicht nicht nachteilig beeinflussen. Die weiteren Bestandteile können beispielsweise anorganische Verbindungen, wie Metallsalze oder weitere Kunststoffe, wie weitere thermoplastische Kunststoffe sein. Es ist jedoch auch denkbar, dass die weiteren Bestandteile Füllstoffe oder Pigmente sind, beispielsweise Ruß oder Metalloxide. Als geeignete thermoplastische Kunststoffe kommen für die weiteren Bestandteile insbesondere solche in Betracht, die durch ein gutes Extrusionsverhalten leicht verarbeitbar sind. Hierunter eignen sich durch Kettenpolymerisation erhaltene Polymere, insbesondere Polyester oder Polyolefine, wobei cyclische Olefin-Copolymere (COC), polycyclische Olefin-Copolymere (POC), insbesondere Polyethylen und Polypropylen, besonders bevorzugt sind und Polyethylen ganz besonders bevorzugt ist. Unter den Polyethylenen sind HDPE, MDPE, LDPE, LLDPE, VLDPE und PE sowie Mischungen aus mindestens zwei davon bevorzugt. Es können auch Mischungen aus mindestens zwei thermoplastischen Kunststoffen eingesetzt werden. Geeignete Polymerschichten besitzen eine Schmelzflussrate (MFR - *melt flow rate)* in einem Bereich von 1 bis 25 g/10 min, vorzugsweise in einem Bereich von 2 bis 20 g/10 min und besonders bevorzugt in einem Bereich von 2,5 bis 15 g/10 min, und eine Dichte in einem Bereich von 0,890 g/cm³ bis 0,980 g/cm³, vorzugsweise in einem Bereich von 0,895 g/cm³ bis 0,975 g/cm³, und weiter bevorzugt in einem Bereich von 0,900 g/cm³ bis 0,970 g/cm³. Die Polymerschichten besitzen bevorzugt mindestens eine Schmelztemperatur in einem Bereich von 80 bis 155°C, vorzugsweise in einem Bereich von 90 bis 145°C und besonders bevorzugt in einem Bereich von 95 bis 135°C. Eine bevorzugte Polymerschicht ist eine Polyolefinschicht, bevorzugt eine Polyethylenschicht oder eine Polypropylenschicht oder beides.

### Polyolefin

Ein bevorzugtes Polyolefin ist ein Polyethylen oder ein Polypropylen oder beides. Ein bevorzugtes Polyethylen ist eines ausgewählt ist aus der Gruppe bestehend aus einem LDPE, einem LLDPE, und einem HDPE, oder eine Kombination aus mindestens zwei davon. Ein weiteres bevorzugtes Polyolefin ist ein mPolyolefin. Geeignete Polyethylene besitzen eine Schmelzflussrate (MFR - *melt flow rate*) in einem Bereich von 1 bis 25 g/10 min, vorzugsweise in einem Bereich von 2 bis 20 g/10 min und besonders bevorzugt in einem Bereich von 2,5 bis 15 g/10 min, und eine Dichte in einem Bereich von 0,910 g/cm³ bis 0,935 g/cm³, vorzugsweise in einem Bereich von 0,912 g/cm³ bis 0,932 g/cm³, und weiter bevorzugt in einem Bereich von 0,915 g/cm³ bis 0,930 g/cm³.

### mPolyolefin

Ein mPolyolefin ist ein Polyolefin, welches mittels eines Metallocen-Katalysators hergestellt wurde. Ein Metallocen ist eine metallorganische Verbindung, in welcher ein zentrales Metallatom zwischen zwei organischen Liganden, wie beispielsweise Cyclopentadienyl-Liganden angeordnet ist. Ein bevorzugtes mPolyolefin ist ein mPolyethylen oder ein mPolypropylen oder beides. Ein bevorzugtes mPolyethylen ist eines ausgewählt ist aus der Gruppe bestehend aus einem mLDPE, einem mLLDPE, und einem mHDPE, oder eine Kombination aus mindestens zwei davon.

### Schmelztemperaturen

Ein bevorzugtes mPolyolefin ist gekennzeichnet durch mindestens eine erste Schmelztemperatur und eine zweite Schmelztemperatur. Bevorzugt ist das mPolyolefin zusätzlich zu der ersten und der zweiten Schmelztemperatur durch eine dritte Schmelztemperatur gekennzeichnet. Eine bevorzugte erste Schmelztemperatur liegt in einem Bereich von 84 bis 108°C, bevorzugt von 89 bis 103°C, bevorzugter von 94 bis 98°C. Eine bevorzugte weitere Schmelztemperatur liegt in einem Bereich von 100 bis 124°C, bevorzugt von 105 bis 119°C, bevorzugter von 110 bis 114°C.

### Haftung / Haftvermittlerschicht

Zwischen Schichten des flächenförmigen Verbunds, welche nicht unmittelbar aneinander angrenzen, kann sich eine Haftvermittlerschicht befinden. Insbesondere kann sich zwischen jeder n-ten Barriereschicht und einer Polymerschicht, welche die n-te Barriereschicht auf einer der n-ten Trägerschicht abgewandten Seite überlagert jeweils eine Haftvermittlerschicht befinden, wobei n eine ganze Zahl aus dem Bereich von 1 bis 4 ist.

Als Haftvermittler in einer Haftvermittlerschicht kommen alle Kunststoffe in Betracht, die durch Funktionalisierung mittels geeigneter funktioneller Gruppen geeignet sind, durch das Ausbilden von Ionenbindungen oder kovalenten Bindungen zu einer Oberfläche einer jeweils angrenzenden Schicht eine feste Verbindung zu erzeugen. Vorzugsweise handelt es sich um funktionalisierte Polyolefine, die durch Co-Polymerisation von Ethylen mit Acrylsäuren wie Acrylsäure, Methacrylsäure, Crotonsäure, Acrylaten, Acrylatderivaten oder Doppelbindungen tragenden Carbonsäureanhydriden, beispielsweise Maleinsäureanhydrid, oder mindestens zwei davon, erhalten wurden. Hierunter sind Polyethylen-maleinsäureanhydrid-Pfropfpolymere (EMAH), Ethylen-Acrylsäure-Copolymere (EAA) oder Ethylen-Methacrylsäure-Copolymere (EMAA) bevorzugt, welche beispielsweise unter den Handelsbezeichnungen Bynel® und Nucrel®0609HSA durch DuPont oder Escor®6000ExCo von ExxonMobile Chemicals vertrieben werden.

Erfindungsgemäß ist es bevorzugt, dass die Haftung zwischen einer Trägerschicht, einer Polymerschicht oder einer Barriereschicht zu der jeweils nächsten Schicht mindestens 0,5 N/15mm, vorzugsweise mindestens 0,7 N/15mm und besonders bevorzugt mindestens 0,8 N/15mm, beträgt. In einer erfindungsgemäßen Ausgestaltung ist es bevorzugt, dass die Haftung zwischen einer Polymerschicht und einer Trägerschicht mindestens 0,3 N/15mm, bevorzugt mindestens 0,5 N/15mm und besonders bevorzugt mindestens 0,7 N/15mm beträgt. Weiterhin ist es bevorzugt, das die Haftung zwischen einer Barriereschicht und einer Polymerschicht mindestens 0,8 N/15mm, bevorzugt mindestens 1,0 N/15mm und besonders bevorzugt mindestens 1,4 N/15mm beträgt. Für den Fall, dass eine Barriereschicht über eine Haftvermittlerschicht mittelbar auf eine Polymerschicht folgt ist es bevorzugt, dass die Haftung zwischen der Barriereschicht und der Haftvermittlerschicht mindestens 1,8 N/15mm, bevorzugt mindestens 2,2 N/15mm und besonders bevorzugt mindestens 2,8 N/15mm beträgt. In einer besonderen Ausgestaltung ist die Haftung zwischen den einzelnen Schichten so stark ausgebildet, dass es beim Haftungstest zu einem Zerreißen einer Trägerschicht, im Falle eines Kartons als Trägerschicht zu einem so genannten Kartonfaserriss, kommt.

### einstückig

Zwei Schichten sind dann einstückig ausgebildet, wenn es einen Übergangsbereich gibt, in dem die beiden Schichten aneinander angrenzen und ohne Zwischenschicht sowie ohne Verbindungselement ineinander übergehen. Ein bevorzugter Übergangsbereich ist ein Faltbereich. Ein Faltbereich beinhaltet eine Faltung. Eine bevorzugte Faltung verläuft entlang einer Rillung. Einstückig ausgebildete Schichten sind bevorzugt gemeinsam als ein Stück aus Rohmaterialien hergestellt worden und nicht nach dieser Herstellung miteinander verbunden worden. Einstückig ausgebildete Schichten haben bevorzugt dieselbe Zusammensetzung oder denselben Aufbau oder beides. In einer Ausgestaltung der Erfindung ist es bevorzugt, dass mindestens eine Schicht, vorzugsweise alle Schichten, des Verbunds jeweils als solche einstückig ausgebildet sind. Es ist ebenso bevorzugt, dass gleichnamige Schichten unterschiedlicher Verbundbereiche über mindestens zwei dieser unterschiedlichen Verbundbereiche jeweils als solche einstückig ausgebildet sind.

### Behältervorläufer

Ein bevorzugter Behältervorläufer ist mantelförmig oder schlauchförmig oder beides. Ein mantelförmiger Behältervorläufer ist vorzugsweise dadurch gekennzeichnet, dass seine Außenfläche einer geometrischen Mantelfläche entspricht. Ein schlauchförmiger Behältervorläufer ist vorzugsweise ein semi-endloses Schlauchgebilde mit jeweils einer Öffnung an entgegengesetzten Enden des Schlauchs.

### Behälter

Der erfindungsgemäße geschlossene Behälter kann eine Vielzahl von unterschiedlichen Formen aufweisen, bevorzugt ist jedoch eine im Wesentlichen quaderförmige Struktur. Weiterhin kann der Behälter vollflächig aus einem flächenförmigen Verbund gebildet sein, oder einen 2- oder mehrteiligen Aufbau aufweisen. Bei einem mehrteiligen Aufbau ist es denkbar, dass neben dem flächenförmigen Verbund auch andere Materialien zum Einsatz kommen, beispielsweise Plastik, welches insbesondere in den Kopf oder Bodenbereichen des Behälters zum Einsatz kommen können. Hierbei ist es jedoch bevorzugt, dass der Behälter zu mindestens 50 %, besonders bevorzugt zu mindestens 70 % und darüber hinaus bevorzugt zu mindestens 90 % der Fläche aus dem flächenförmigen Verbund aufgebaut ist. Weiterhin kann der Behälter eine Vorrichtung zum Entleeren des Inhalts aufweisen. Diese kann beispielsweise aus Plastik geformt und an der Behälteraußenseite aufgebracht werden. Denkbar ist auch, dass diese Vorrichtung durch "direct injection molding" in den Behälter integriert ist. Gemäß einer bevorzugten Ausgestaltung weist der erfindungsgemäße Behälter mindestens eine, bevorzugt von 4 bis 22 oder auch mehr Kanten, besonders bevorzugt von 7 bis 12 Kanten auf. Als Kante werden im Rahmen der vorliegenden Erfindung Bereiche verstanden, die beim Falten einer Fläche entstehen. Als beispielhafte Kanten seien die länglichen Berührungsbereiche von jeweils zwei Wandflächen des Behälters genannt. In dem Behälter stellen die Behälterwände vorzugsweise die von den Kanten eingerahmten Flächen des Behälters dar. Bevorzugt beinhaltet der geschlossene Behälter keinen nicht einstückig mit dem flächenförmigen Verbund ausgebildeten Boden oder kein nicht einstückig mit dem flächenförmigen Verbund ausgebildeten Deckel oder beides.

### Schälen

Schälen ist ein dem Fachmann bekannter Verfahrensschritt zum Verringern einer Schichtdicke einer Schicht, bevorzugt einer Trägerschicht, bevorzugter einer Trägerschicht aus einem ausgewählt aus der Gruppen bestehend aus Karton, Pappe, und Papier, oder eine Kombination aus mindestens zwei davon. Das Schälen erfolgt bevorzugt mit einem span-abhebenden Werkzeug, vorzugsweise mit einem Schälwerkzeug oder einem Spaltwerkzeug oder beidem. Ein bevorzugtes span-abhebendes Werkzeugt ist ein rotierendes Werkzeug. Ein bevorzugtes rotierendes Werkzeug ist ein Messer, bevorzugt ein Topfmesser, oder ein Fräswerkzeug oder beides. Ein weiteres bevorzugtes span-abhebendes Werkzeug ist ein Messer, bevorzugt ein rotierendes Messer, am bevorzugtesten ein Topfmesser, oder ein Fräswerkzeug oder beides.

### Falten des flächenförmigen Verbunds

Es ist bevorzugt, dass das Falten in einem Temperaturbereich von 10 bis 50°C, vorzugsweise in einem Bereich von 15 bis 45°C und besonders bevorzugt in einem Bereich von 20 bis 40°C des gefalteten Bereichs des flächenförmigen Verbunds erfolgt. Dieses kann dadurch erreicht werden, dass der flächenförmige Verbund eine Temperatur in den vorstehenden Bereichen hat. Weiterhin ist es bevorzugt, dass ein Faltwerkzeug, vorzugsweise zusammen mit dem flächenförmigen Verbund, eine Temperatur in den vorstehenden Bereich hat. Hierzu verfügt das Faltwerkzeug nicht über eine Heizung. Vielmehr kann das Faltwerkzeug oder auch der flächenförmige Verbund oder beide gekühlt werden. Ferner ist es bevorzugt, dass das Falten bei einer Temperatur von maximal 50°C als "Kaltfalten" und das Verbinden bei über 50°C, vorzugsweise über 80°C und besonders bevorzugt über 120°C als "Heißsiegeln" erfolgt. Die vorstehenden Bedingungen und insbesondere Temperaturen gelten bevorzugt auch in der Umgebung des Faltens, beispielsweise in dem Gehäuse des Faltwerkzeugs. Weiter ist es bevorzugt, dass das Kaltfalten oder das Kaltfalten in Kombination mit dem Heißsiegeln bei sich bei Faltungen ausbildenden Winkeln µ unter 100°, vorzugsweise unter 90°, besonders bevorzugt unter 70° sowie darüber hinaus bevorzugt unter 50° angewendet wird. Der Winkel µ wird durch zwei aneinandergrenzende Faltflächen gebildet.

Unter "Falten" wird dabei erfindungsgemäß ein Vorgang verstanden, bei dem vorzugsweise mittels einer Faltkante eines Faltwerkzeugs ein länglicher, einen Winkel bildender Knick in dem gefalteten flächenförmigen Verbund erzeugt wird. Hierzu werden häufig zwei aneinandergrenzende Flächen eines flächenförmigen Verbunds immer mehr auf einander zu gebogen. Durch die Faltung entstehen mindestens zwei aneinandergrenzende Faltflächen, die dann zumindest in Teilbereichen zum Ausbilden eines Behälterbereiches verbunden werden können.

Erfindungsgemäß kann das Verbinden durch jede dem Fachmann geeignet erscheinende Maßnahme erfolgen, die eine möglichst gas- und flüssigkeitsdichte Verbindung ermöglicht.

Weiter ist es bevorzugt, dass die Faltflächen einen Winkel µ von kleiner 90°, vorzugsweise von kleiner 45° und besonders bevorzugt von kleiner 20° bilden. Häufig werden die Faltflächen soweit gefaltet, dass diese am Ende des Faltens aufeinander zu liegen kommen. Dieses ist insbesondere vorteilhaft, wenn die aufeinander liegenden Faltflächen im Anschluss miteinander verbunden werden, um den Behälterboden und den häufig giebelartig oder auch eben ausgestalteten Behälterkopf zu bilden. Zur Giebelausgestaltung sei beispielhaft auf WO 90/09926 A2 verwiesen.

### Längsnaht

Bevorzugt gehören der erste Verbundbereich und der weitere Verbundbereich zu einer Längsnaht eines Behältervorläufers oder des geschlossenen Behälters. Bevorzugt bilden der erste Verbundbereich und der weitere Verbundbereich eine Längsnaht eines Behältervorläufers oder des geschlossenen Behälters. Bevorzugt ist die erfindungsgemäße Vorrichtung so ausgebildet, dass ein Behältervorläufer durch Siegeln verschlossen werden kann, wobei, bevorzugt quer, über die Längsnaht des Behältervorläufers gesiegelt wird. Bei dem Siegeln liegt eine verdickte Seite der Längsnaht erfindungsgemäß nicht in der Aussparung, sondern gerade an der anderen Fixieroberfläche, gegenüber der Aussparung, an.

### Nahrungsmittel

Als Nahrungsmittel kommen alle dem Fachmann bekannten Lebensmittel für den menschlichen Verzehr und auch Tierfutter in Betracht. Bevorzugte Nahrungsmittel sind oberhalb 5°C flüssig, beispielsweise Milchprodukte, Suppen, Saucen, nichtkohlensäurehaltige Getränke. Das Befüllen des Behälters oder des Behältervorläufers kann auf verschiedene Weise erfolgen. Zum einen können das Nahrungsmittel und der Behälter oder der Behältervorläufer getrennt vor dem Befüllen durch geeignete Maßnahmen wie der Behandlung des Behälters oder des Behältervorläufers mit H₂O₂, UV-Strahlung oder anderer geeigneter energiereicher Strahlung, Plasmabehandlung oder einer Kombination aus mindestens zwei davon, sowie dem Erhitzen des Nahrungsmittels möglichst weitestgehend entkeimt werden und anschließend in den Behälter oder den Behältervorläufer gefüllt werden. Diese Art des Befüllens wird häufig als "aseptisches Füllen" bezeichnet und ist erfindungsgemäß bevorzugt. Es ist ferner zusätzlich oder auch anstelle des aseptischen Füllens weit verbreitet, dass der mit Nahrungsmittel gefüllte Behälter oder Behältervorläufer zum Verringern der Keimzahl erhitzt wird. Dieses erfolgt vorzugsweise durch Pasteurisieren oder Autoklavieren. Bei dieser Vorgehensweise können auch weniger sterile Nahrungsmittel und Behälter oder Behältervorläufer eingesetzt werden.

### Loch / Öffnungshilfe

Um die Öffenbarkeit des erfindungsgemäßen geschlossenen Behälters zu erleichtern, kann eine Trägerschicht mindestens ein Loch aufweisen. In einer besonderen Ausgestaltung ist das Loch mindestens mit einer Barriereschicht, und bevorzugt einer Polymerschicht, als Lochdeckschichten überdeckt. Ferner können zwischen den bereits genannten Schichten eine oder mehrere weitere Schichten, insbesondere Haftvermittlerschichten, vorgesehen sein. Hierbei ist es bevorzugt, dass die Lochdeckschichten mindestens teilweise, vorzugsweise zu mindestens 30%, bevorzugt mindestens 70% und besonders bevorzugt zu mindestens 90% der durch das Loch gebildeten Fläche miteinander verbunden sind. Gemäß einer besonderen Ausgestaltung ist es bevorzugt, dass das Loch den gesamten flächenförmigen Verbund durchdringt und durch einen das Loch verschließenden Verschluss bzw. Öffnungsvorrichtung überdeckt wird. Im Zusammenhang mit einer bevorzugten Ausführungsform kann das in der Trägerschicht vorgesehene Loch jede dem Fachmann bekannte und für verschiedene Verschlüsse, Trinkhalme oder Öffnungshilfen geeignete Form haben. Meist erfolgt ein Öffnen eines geschlossenen Behälters durch mindestens teilweises Zerstören der das Loch überdeckenden Lochdeckschichten. Dieses Zerstören kann durch Schneiden, Eindrücken in den Behälter oder Herausziehen aus dem Behälter erfolgen. Das Zerstören kann durch ein mit dem Behälter verbundenen und im Bereich des Lochs, meist oberhalb des Lochs angeordneten, öffenbaren Verschluss oder einen Trinkhalm, der durch die das Loch bedeckenden Lochdeckschichten gestoßen wird, erfolgen.

Gemäß einer weiteren bevorzugten Ausführungsform weist eine Trägerschicht des flächenförmigen Verbunds eine Vielzahl von Löchern in Form einer Perforation auf, wobei die einzelnen Löcher mindestens mit einer Barriereschicht, und vorzugsweise einer Polymerschicht, als Lochdeckschichten überdeckt sind. Ein aus einem solchen Verbund hergestellter Behälter kann dann durch Aufreißen entlang der Perforation geöffnet werden. Derartige Löcher für Perforationen werden bevorzugt mittels eines Lasers erzeugt. Besonders bevorzugt ist der Einsatz von Laserstrahlen, wenn eine Metallfolie oder eine metallisierte Folie als Barriereschicht eingesetzt wird. Es ist ferner möglich, dass die Perforation durch mechanische, meist Klingen aufweisende, Perforationswerkzeuge eingebracht wird.

Gemäß einer weiteren bevorzugten Ausführungsform wird der flächenförmige Verbund mindestens im Bereich des mindestens einen Lochs einer thermischen Behandlung unterzogen, Im Fall von mehreren in Form einer Perforation vorliegenden Löchern in der Trägerschicht ist es insbesondere bevorzugt, diese thermische Behandlung auch um den Randbereich des Loches herum durchzuführen. Die thermische Behandlung kann durch Strahlung, durch Heißgas, durch einen Feststoffwärmekontakt, durch mechanische Schwingungen, bevorzugt durch Ultraschall, oder durch eine Kombination von mindestens zwei dieser Maßnahmen erfolgen. Besonders bevorzugt erfolgt die thermische Behandlung durch Bestrahlung, bevorzugt elektromagnetische Strahlung und insbesondere bevorzugt elektromagnetische Induktion oder auch durch Heißgas. Die jeweils zu wählenden, optimalen Betriebsparameter sind dem Durchschnittsfachmann bekannt.

### Bestrahlen

Im Fall des Bestrahlens kommt jede dem Fachmann zum Erweichen der Kunststoffe der vorhandenen Polymerschichten geeignete Strahlenart in Betracht. Bevorzugte Strahlenarten sind IR-, UV-Strahlen, und Mikrowellen. Im Fall der IR-Strahlen, die auch zum IR-Schweißen von flächenförmigen Verbunden eingesetzt werden, sind Wellenlängenbereiche von 0,7 bis 5 µm zu nennen. Weiterhin können Laserstrahlen in einem Wellenlängenbereich von 0,6 bis kleiner 1,6 µm eingesetzt werden. Im Zusammenhang mit dem Einsatz von IR-Strahlen werden diese durch verschiedene, dem Fachmann bekannte und geeignete Strahler erzeugt. Kurzwellige Strahler im Bereich von 1 bis 1,6 µm sind vorzugsweise Halogenstrahler. Mittelwellige Strahler im Bereich von >1,6 bis 3,5 µm sind beispielsweise Metallfolienstrahler. Als langwellige Strahler im Bereich >3,5 µm werden häufig Quarzstrahler eingesetzt. Immer öfter werden Laser eingesetzt. So werden Diodenlaser in einem Wellenlängenbereich von 0,8 bis 1 µm, Nd:YAG-Laser bei etwa 1 µm und CO₂-Laser bei etwa 10,6 µm eingesetzt. Auch Hochfrequenztechniken mit einem Frequenzbereich von 10 bis 45 MHz, häufig in einem Leistungsbereich von 0,1 bis 100 kW werden eingesetzt.

### Ultraschall

Im Fall des Ultraschalls sind die nachfolgenden Behandlungsparameter bevorzugt:
- P1: eine Frequenz in einem Bereich von 5 bis 100 kHz, vorzugsweise in einem Bereich von 10 bis 50 kHz und besonders bevorzugt in einem Bereich von 15 bis 40 kHz;
- P2: eine Amplitude im Bereich von 2 bis 100 µm, vorzugweise in einem Bereich von 5 bis 70 µm und besonders bevorzugt in einem Bereich von 10 bis 50 µm;
- P3: eine Schwingzeit (als Zeitraum, in dem ein Schwingungskörper wie eine Sonotrode oder Induktor auf den flächenförmigen Verbund kontaktschwingend wirkt) in einem Bereich von 50 bis 1000 ms, vorzugsweise in einem Bereich von 100 bis 600 ms und besonders bevorzugt in einem Bereich von 150 bis 300 ms.

Bei der geeigneten Auswahl der Strahlungs- bzw. Schwingungsbedingungen ist es vorteilhaft, die Eigenresonanzen der Kunststoffe zu berücksichtigen und Frequenzen nahe dieser auszuwählen.

### Kontakt mit einem Feststoff

Ein Erwärmen über einen Kontakt mit einem Feststoff kann beispielsweise durch eine direkt mit dem flächenförmigen Verbund in Kontakt stehenden Heizplatte oder Heizform erfolgen, die die Wärme an den flächenförmigen Verbund abgibt.

### Heißgas

Das Heißgas, bevorzugt Heißluft, kann durch geeignete Gebläse, Austrittsöffnungen oder Düsen oder einer Kombination daraus auf den flächenförmigen Verbund gerichtet werden. Häufig werden das Kontakterwärmen und das Heißgas gleichzeitig eingesetzt. So kann beispielsweise eine mit Heißgas durchströmte und dadurch aufgeheizte und das Heißgas durch geeignete Öffnungen abgebende Haltevorrichtung für einen aus dem flächenförmigen Verbund geformten Schlauch den flächenförmigen Verbund durch Kontakt mit der Wand der Haltevorrichtung und dem Heißgas erwärmen. Ferner kann das Erwärmen des Schlauchs auch dadurch erfolgen, dass der Schlauch mit einer Schlauchhalterung fixiert und die zu erwärmenden Bereiche des Schlauchs von einer oder zwei und mehr in der Mantelhalterung vorgesehenen Heißgasdüsen angeströmt werden.

### Fixierelement

Das erste Fixierelement und das weitere Fixierelement sind so ausgebildet, dass der flächenförmige Verbund mindestens teilweise zwischen der ersten Fixieroberfläche und der weiteren Fixieroberfläche fixiert, bevorzugt eingeklemmt, werden kann. Hierzu kann das erste Fixierelement oder das weitere Fixierelement oder beide prismenförmig sein, wobei das Prisma eine rechteckige oder trapezförmige Grundfläche haben kann. Im Fall eines prismenförmigen Fixierelements ist die entsprechende Fixieroberfläche bevorzugt eine Seitenfläche des Prismas, welche einen Teil einer Mantelfläche des Prismas darstellt. Ferner kann das erste Fixierelement oder das weitere Fixierelement oder beide als Rundrohr ausgebildet sein. Im Fall eines Rundrohrs als Fixierelement ist die entsprechende Fixieroberfläche ein Teil der Mantelfläche des Rundrohrs. Bevorzugt ist mindestens eine der beiden Fixieroberflächen, bevorzugt die erste Fixieroberfläche, eben ausgebildet. Bevorzugt ist mindestens eine der beiden Fixieroberflächen, bevorzugt die weitere Fixieroberfläche, außerhalb der Aussparung eben ausgebildet. Das erste Fixierelement ist bevorzugt schneidenartig oder messerartig oder beides ausgebildet. Hierbei beinhaltet die Schneidkante gerade die erste Fixieroberfläche. Dabei ist die Schneidkante nicht messerscharf, sondern stumpf ausgebildet. Das erste Fixierelement soll durch Ausüben von Druck den flächenförmigen Verbund Pressen oder Quetschen können, nicht jedoch schneiden. Die Begriffe schneidenartig und messerartig sollen vielmehr auf die flache Form des Fixierelements hinweisen. Bevorzugt sind die Fixierelemente soweit längserstreckt, dass mehrere erfindungsgemäße flächenförmige Verbunde nebeneinander erfindungsgemäß zwischen den Fixierelementen fixiert werden können. Dazu verfügt mindestens eines der Fixierelemente über mehrere, bevorzugt identische, erfindungsgemäße Aussparungen. Bevorzugt ist das die Aussparungen beinhaltende Fixierelement als Leiste ausgebildet.

Bevorzugt ist die Aussparung eine Nut. Eine bevorzugte Nut ist eine längserstreckte Ausnehmung, bevorzugt durch ein Fräsen erzeugt. Bevorzugt beinhaltet die Aussparung zwei Kanten des Fixierelements. Bevorzugt ist die Aussparung so ausgebildet ist, dass es bei einem Verpressen des ersten Verbundbereichs und des weiteren Verbundbereichs zwischen der ersten Fixieroberfläche und der weiteren Fixieroberfläche zu keiner Beschädigung, bevorzugt zu keiner Quetschung, des ersten Verbundbereichs oder des weiteren Verbundbereichs kommt. Hierbei kann eine Beschädigung insbesondere eine Verbrennung durch einen zu großen Wärmeintrag sein.

Bevorzugt ist das erste Fixierelement oder das weitere Fixierelement, bevorzugter das erste Fixierelement ein Schwingkörper, bevorzugt eine Sonotrode, ausgebildet, um hochfrequent zu schwingen, bevorzugt im Ultraschallbereich, und in dem flächenförmigen Verbund eine Schwingung anzuregen. Durch das Anregen der Schwingung erfolgt bevorzugt das für ein Siegeln notwendige Erwärmen des flächenförmigen Verbunds. Hierbei werden bevorzugt nur die Schichten des flächenförmigen Verbunds auf eine Temperatur oberhalb ihrer jeweiligen Schmelztemperatur erwärmt, die zum Schaffen einer Siegelverbindung zuvor unverbundener Schichten beitragen sollen. Bevorzugt ist das erste Fixierelement oder das weitere Fixierelement, bevorzugter das weitere Fixierelement ein Amboss zu der Sonotrode. Bevorzugt beinhaltet die Sonotrode keine Aussparung.

Ein Umfang eines Fixierelements ist ein Umfang senkrecht zu einer Richtung, entlang der das Fixierelement längserstreckt ist. Im Fall eines prismenförmigen Fixierelements ist der Umfang des Fixierelements gerade der Umfang einer Grundfläche des Prismas. Im Fall eines Rundrohrs als Fixierelement ist der Umfang des Fixierelements gerade der Umfang des Rundrohrs.

### Naht

Eine Naht ist ein Raumbereich, in dem mindestens zwei Nahtbereiche miteinander verbunden sind. Hierbei ist ein Nahtbereich ein sich entlang der Naht erstreckender Teilbereich einer Oberfläche oder einer Schicht oder beides. Der Nahtbereich grenzt also an die Naht an. Sind entlang der Naht zwei Schichten oder Schichtfolgen miteinander verbunden, ist ein Teilbereich der einen Schicht oder Schichtfolge entlang der Naht der erste Nahtbereich und ein Teilbereich der anderen Schicht oder Schichtfolge entlang der Naht der weitere Nahtbereich. Eine bevorzugte Naht ist eine Siegelnaht. Im Falle einer Siegelnaht ist die Naht der Raumbereich, in dem das Siegelmaterial aufgeschmolzen war und nun die beiden Oberflächen oder Schichten oder beides miteinander verbindet. Eine bevorzugte Naht ist gas- und flüssigkeitsdicht. Eine bevorzugte Naht ist eine Kopfnaht. Eine Kopfnaht ist eine Naht des geschlossenen Behälters, welche den Behälter in seinem Kopf- oder Giebelbereich verschließt.

### Sterilisieren

Sterilisieren bezeichnet ein Behandeln eines Produktes, bevorzugt eines Behälters oder eines Nahrungsmittels oder beides, zu einem Verringern einer Keimzahl an oder in dem Produkt. Das Sterilisieren kann zum Beispiel durch Wärmeeinwirkung oder durch Kontakt zu einer Chemikalie erfolgen. Die Chemikalie kann dabei gasförmig oder flüssig oder beides sein. Eine bevorzugte Chemikalie ist Wasserstoffperoxid.

### Autoklavieren

Autoklavieren bezeichnet ein Behandeln eines Produktes, meist eines befüllten und geschlossenen Behälters, wobei sich das Produkt in einer Druckkammer befindet und auf eine Temperatur oberhalb von 100°C, bevorzugt zwischen 100 und 140°C, erwärmt wird. Zudem ist der Kammerdruck in der Druckkammer oberhalb von 1 bar, bevorzugt oberhalb von 1,1 bar, bevorzugter oberhalb von 1,2 bar, bevorzugter oberhalb von 1,3 bar, und bis zu 4 bar. Weiter bevorzugt erfolgt das Autoklavieren unter Kontakt des Produktes mit Wasserdampf.

### Pasteurisieren

Pasteurisierung oder Pasteurisation bezeichnet die kurzzeitige Erwärmung von flüssigen oder pastösen Lebensmitteln auf Temperaturen bis 100°C zur Abtötung von Mikroorganismen. Sie dient dazu, unter anderem Milch, Frucht- und Gemüsesäfte und Flüssigeis haltbar zu machen.

### Messmethoden

Die folgenden Messmethoden wurden im Rahmen der Erfindung benutzt. Sofern nichts anderes angegeben ist wurden die Messungen bei einer Umgebungstemperatur von 25°C, einem Umgebungsluftdruck von 100 kPa (0,986 atm) und einer relativen Luftfeuchtigkeit von 50 % durchgeführt.

### MFR-Wert

Der MFR-Wert wird gemäß der Norm ISO 1133 (sofern nicht anders genannt bei 190°C und 2,16 kg) gemessen.

### Dichte

Die Dichte wird gemäß der Norm ISO 1183-1 gemessen.

### Schmelztemperatur

Die Schmelztempeatur wird anhand der DSC Methode ISO 11357-1, -5 bestimmt. Die Gerätekalibrierung erfolgt gemäß den Herstellerangaben anhand folgender Messungen:
- Temperatur Indium - Onset Temperatur,
- Schmelzwärme Indium,
- Temperatur Zink - Onset Temperatur.

### Sauerstoffpermeationsrate

Die Sauerstoffpermeationsrate wird gemäß der Norm ISO 14663-2 Anhang C bei 20°C und 65% relativer Luftfeuchte bestimmt.

### Feuchtegehalts des Karton

Der Feuchtegehalts des Karton wird nach der Norm ISO 287:2009 gemessen.

### Haftung

Zur Bestimmung der Haftung zweier benachbarter Schichten werden diese auf ein 90° Peel Test Gerät, beispielsweise der Firma Instron "German rotating wheel fixture", auf einer drehbaren Walze fixiert, die sich während der Messung mit 40 mm/min dreht. Die Proben wurden zuvor in 15 mm breite Streifen zugeschnitten. An einer Seite der Probe werden die Lagen voneinander gelöst und das abgelöste Ende in eine senkrecht nach oben gerichtete Zugvorrichtung eingespannt. An der Zugvorrichtung ist ein Messgerät zum Bestimmen der Zugkraft angebracht. Die beim Drehen der Walze wird die Kraft gemessen die nötig ist, um die Lagen voneinander zu trennen. Diese Kraft entspricht der Haftung der Schichten zueinander und wird in N/15 mm angegeben. Die Trennung der einzelnen Schichten kann beispielsweise mechanisch, oder durch eine gezielte Vorbehandlung, beispielsweise durch Einweichen der Probe für 3 min in 60°C warmer, 30 %-iger Essigsäure erfolgen.

### Schichtdicke

Aus dem zu untersuchenden Verbundmaterial wird eine ca. 2,5 bis 3,0 cm × 1,0 bis 1,5 cm große Probe entnommen. Die lange Seite der Probe sollte quer zur Laufrichtung der Extrusion und der Faserrichtung des Kartons sein. Die Probe wird in einer Metallklemme, die eine glatte Oberfläche bildet, fixiert. Der Überstand der Probe sollte nicht mehr als 2 bis 3 mm sein. Die Metallklemme wird vor dem Schnitt fixiert. Um einen sauberen Schnitt, insbesondere der Kartonfaser, zu erhalten, wird der aus der Metallklemme überstehende Teil der Probe mit Kältespray vereist. Anschließend wird dieser mittels einer Einwegklinge (Fa. Leica, Microtome Blades) abgetragen. Die Fixierung der Probe in der Metallklemme wird nun so gelockert, dass die Probe ca. 3 bis 4 mm aus der Metallklemme geschoben werden kann. Anschließend wird wiederum fixiert. Zur Untersuchung im Lichtmikroskop (Nicon Eclipse E800) wird die Probe im Probenhalter auf den Objekttisch des Lichtmikroskops unter eines der Objektive (Vergrößerung X2,5; X5; X10; X20; X50) gestellt. Das passende Objektiv sollte je nach Schichtdicke des zu untersuchenden Bereichs ausgewählt werden. Die genaue Zentrierung erfolgt beim Mikroskopieren. Als Lichtquelle dient in den meisten Fällen eine Seitenbeleuchtung (Schwanenhals-Leuchten). Falls erforderlich, wird zusätzlich oder ersatzweise die Auflichtbeleuchtung des Lichtmikroskops verwendet. Ist die Probe optimal geschärft und ausgeleuchtet, sollten die einzelnen Schichten des Verbundes erkennbar sein. Für Dokumentation und Messungen dient eine Olympus-Kamera (Olympus DP 71) mit passender Bildverarbeitungssoftware (analySIS) von Analysis. Hiermit wird auch die Schichtdicke der einzelnen Schichten bestimmt.

### Molekulargewichtsverteilung

Die Molekulargewichtsverteilung wird nach der Gelpermeationschromatographie mittels Lichtstreuung: ISO 16014-3/-5 gemessen.

### Viskositätszahl von PA

Die Viskositätszahl von PA wird nach der Norm ISO 307 in 95% Schwefelsäure gemessen.

### Dichtigkeit

Testmittel zur Dichtigkeitsprüfung: Ein Liter Shellsol D60, Shell Chemicals, mit einer Messerspitze Fettblau B01 (CAS No. 7354-14-2; C.I.Solvent Blue 35 Anthrachinone-Farbstoff).

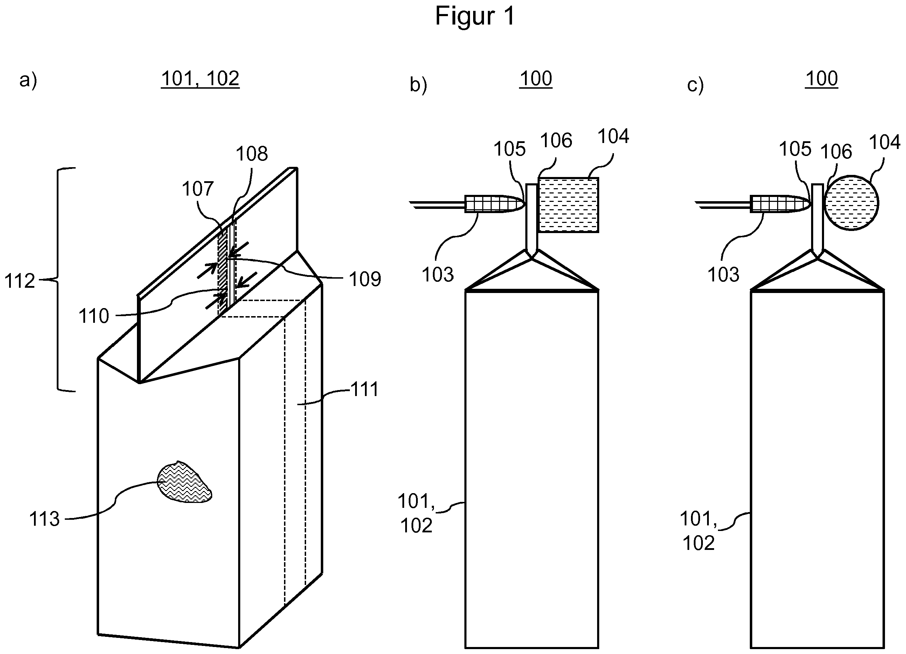

Für diesen Test werden 500 Behälter gemäß dem erfindungsgemäßen Verfahren 400 hergestellt und nach Verfahrensschritt b) 402 und vor Verfahrensschritt c) 403 mit Wasser gefüllt. Die geschlossenen Behälter werden anschließend entlang des Umfangs des Behälters so aufgeschnitten, dass ein versiegelter Kopfbereich 112 gemäß Figur 1a) erhalten wird. Dieser wird mit ca. 20 ml des Testmittels gefüllt und für 3 Stunden gelagert. Anschließend wird auf der Außenseite des Kopfbereichs geprüft, ob das Testmittel dort im Falle von Undichtigkeit der Siegelung blaue Verfärbungen erzeugt hat.

### Schweißnahtverfärbungen

Für diesen Test werden Behälter gemäß dem erfindungsgemäßen Verfahren 400 hergestellt und nach Verfahrensschritt b) 402 und vor Verfahrensschritt c) 403 mit Wasser gefüllt. Die geschlossenen Behälter werden anschließend entlang des Umfangs des Behälters so aufgeschnitten das ein versiegelter Kopfbereich 112 gemäß Figur 1a) erhalten wird. Anschließend wird der Kopfbereich flach gedrückt und die Kopfnaht 701 langsam auf der gesamten Länge des Packungsgiebels von innen nach außen gespalten. Die Verbundbereiche 107 und 108 werden auf Verfärbungen untersucht. Hierbei sind insbesondere deutlich erkennbare punktförmige braune Verfärbungen als negativ einzuschätzen.

Die Erfindung wird im Folgenden durch Beispiele und Zeichnungen genauer dargestellt, wobei die Beispiele und Zeichnungen keine Einschränkung der Erfindung bedeuten.

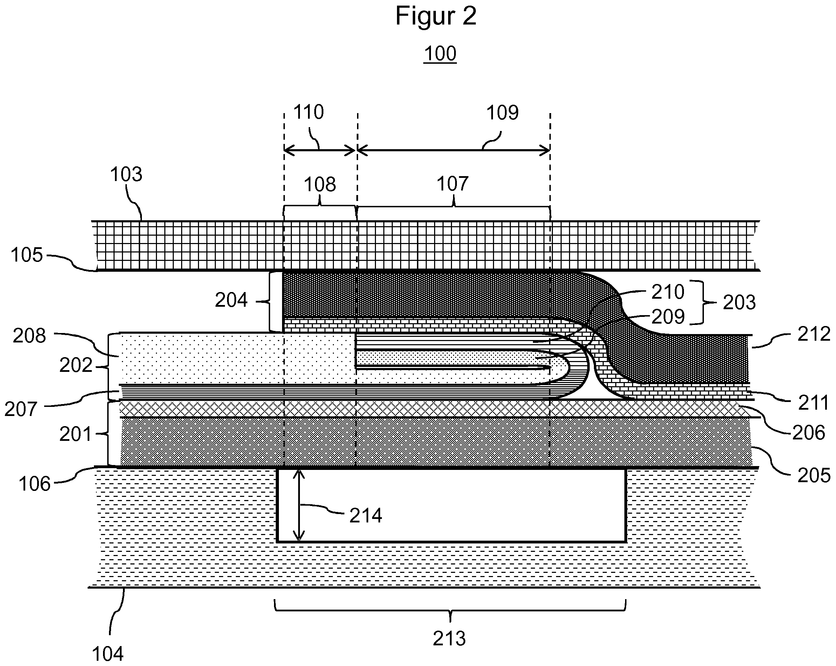

Für die in der Tabelle 1 zusammengefassten Beispiele wurden Behältervorläufer gemäß Figur 1 hergestellt. Dabei beinhalten die Verbundbereiche 107 und 108 die Schichtfolgen wie in Figur 2 gezeigt. Informationen zu dem zum Verschließen des Kopfbereichs und somit Erzeugen einer Kopfnaht verwendeten Siegelverfahrens sowie der dazu verwendeten Anordnung sind Tabelle 1 zu entnehmen. Die Anordnung der Fixierelemente entspricht nicht für alle Beispiele und Vergleichsbeispiele der Figur 2. Vielmehr ist diese Anordnung in der Tabelle 1 festgelegt. Ferner handelt es sich bei den Fixierelementen nicht in jedem Fall um eine Sonotrode und einen Amboss. Dies ist ebenfalls in Tabelle 1 festgelegt. Im Falle des Siegelns mit Heißluft sind die Fixierelemente Anpressbacken und vor dem Anpressen wurde der flächenförmige Verbund an den zu siegelenden Stellen durch Anblasen mit Heißluft erwärmt.

**Tabelle 1: Anzahl von undichten Siegelnähten im Kopfbereich 112 gemäß Methode Dichtigkeit in Abhängigkeit von der Art des Siegelverfahrens, Anordnung der Sonotrode und Anordnung der Aussparung 213, sowie Lebensdauer der Sonotrode**

| | Siegelverfahren | Kontakt Sonotrode | Kontakt Aussparung | Undichte Siegelnähte | Verfärbungen im Verbundbereich 107 oder 108 | Betriebslebensdauer der Sonotrode |
|---|---|---|---|---|---|---|
| Beispiel 1 | Heißluft | / | mit Schicht 205 | 153 | 0 | / |
| Beispiel 2 | Ultraschall | mit Schicht 205 | mit Schicht 205 | 2 | 2 | - |
| Beispiel 3 | Ultraschall | mit Schicht 212 | mit Schicht 205 | 0 | 0 | + |
| Vergleichsbeispiel 1 | Heißluft | / | mit Schicht 212 | 284 | 0 | / |
| Vergleichsbeispiel 2 | Ultraschall | mit Schicht 212 | mit Schicht 212 | 10 | 5 | - |
| Vergleichsbeispiel 3 | Ultraschall | mit Schicht 205 | mit Schicht 212 | 8 | 8 | + |

Ein "+" in Tabelle 1 bedeutet eine längere Betriebslebensdauer der Sonotrode als bei einem "-". Hierbei wurde die Sonotrode aus einer Titanlegierung stets so lange im laufenden Produktionsbetrieb eingesetzt bis sie wegen Rissbildung im Sonotrodenkörper ausgewechselt werden musste. Der Tabelle 1 ist zu entnehmen, dass die Betriebslebensdauer der Sonotrode länger ist, wenn die Aussparung sich im Amboss und nicht in der Sonotrode befindet. Grundsätzlich ist die Dichtigkeit der Kopfnaht besser, wenn mit Ultraschall gesiegelt wird statt mit Heißluft. Wird Heißluft verwendet kommt es relativ häufig zum Ausbilden von Kanälen im gesiegelten Verbund. Entlang dieser Kanäle besteht eine Undichtigkeit. Wird Ultraschall verwendet kann das Ausbilden solcher Kanäle praktisch verhindert werden. Stattdessen können Verfärbungen, insbesondere durch lokal zu starkes Erwärmen einzelner Laminatbereiche, entstehen. Diese stellen eine weitere Quelle für Undichtigkeiten dar, treten jedoch deutlich seltener auf als die Kanäle beim Siegeln mit Heißluft. Ferner kann das Auftreten von Verfärbungen und damit die Anzahl von undichten Kopfnähten weiter reduziert werden, wenn sich die Aussparung im Amboss und nicht in der Sonotrode befindet. Ferner ist an Hand der Tabelle 1 zu sehen, dass bei gleichem Siegelverfahren und im Falle von Ultraschall konstantem Anordnen der Aussparung im Amboss bzw. in der Sonotrode, ein Anordnen der Aussparung auf der nicht durch die Längsnaht verdickten Seite des Laminats (in Figur 2 die untere Seite) zu weniger undichten Siegelnähten im Kopfbereich führt. Dieser Effekt wird beim Vergleichen von jeweils Beispiel 1 mit Vergleichsbeispiel 1, Beispiel 2 mit Vergleichsbeispiel 2, und Beispiel 3 mit Vergleichsbeispiel 3 deutlich. Wie Tabelle 1 zu entnehmen ist, liefert das erfindungsgemäße Beispiel 3 insgesamt die besten Ergebnisse.

Es zeigen:
- Figur 1a): eine schematische Darstellung eines Behältervorläufers, beinhaltend einen erfindungsgemäßen ersten Verbundbereich und einen erfindungsgemäßen zweiten Verbundbereich;
- Figur 1b): eine schematische Darstellung einer erfindungsgemäßen Vorrichtung, beinhaltend einen Behältervorläufer;
- Figur 1c): eine schematische Darstellung einer weiteren erfindungsgemäßen Vorrichtung, beinhaltend einen Behältervorläufer;
- Figur 2: eine schematische Querschnittsdarstellung einer erfindungsgemäßen Vorrichtung;
- Figur 3a): eine schematische Draufsicht einer erfindungsgemäßen weiteren Fixieroberfläche;
- Figur 3b): eine schematische Draufsicht einer weiteren erfindungsgemäßen weiteren Fixieroberfläche;
- Figur 3c): eine schematische Draufsicht einer weiteren erfindungsgemäßen weiteren Fixieroberfläche;
- Figur 4: ein Ablaufdiagramm eines erfindungsgemäßen Verfahrens;
- Figur 5: eine schematische Querschnittsdarstellung eines für ein erfindungsgemäßes Verfahren bereitgestellten flächenförmigen Verbunds;
- Figur 6a): Illustration zu Verfahrensschritt i) eines erfindungsgemäßen Verfahrens;
- Figur 6b): Illustration zu Verfahrensschritt ii) eines erfindungsgemäßen Verfahrens;
- Figur 6c): Illustration zu Verfahrensschritt iii) eines erfindungsgemäßen Verfahrens;
- Figur 6d): Illustration zu Verfahrensschritt iv) eines erfindungsgemäßen Verfahrens;
- Figur 6e): Illustration zu Verfahrensschritt v) eines erfindungsgemäßen Verfahrens;
- Figur 6f): Illustration zu Verfahrensschritt vi) eines erfindungsgemäßen Verfahrens;
- Figur 7: schematische Darstellung eines erfindungsgemäßen geschlossenen Behälters;
- Figur 8a): eine schematische Darstellung eines weiteren geschlossenen Behälters;
- Figur 8b): ein schematischer Querschnitt durch die Naht und die Vertiefung des geschlossenen Behälters in Figur 8a); und
- Figur 9: einen schematischen Längsschnitt durch die Naht und die Vertiefung des geschlossenen Behälters in Figur 8a).

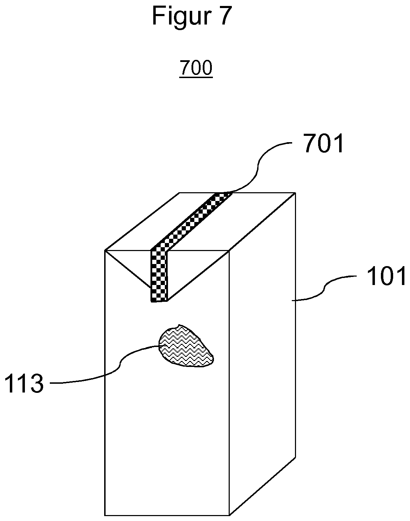

Figur 1a) zeigt eine schematische Darstellung eines Behältervorläufers 102. Dieser besteht aus einem gefalteten flächenförmigen Verbund 101, welcher Bestandteil einer erfindungsgemäßen Vorrichtung 100 in Figur 1b) ist. Ferner umgibt der Behältervorläufer 102 einen Innenraum 113, welcher ein Nahrungsmittel beinhaltet. In einem Kopfbereich 112, auch Giebelbereich genannt, beinhaltet der Behältervorläufer 102 einen ersten Verbundbereich 107 und einen weiteren Verbundbereich 108. Der erste Verbundbereich 107 hat eine erste Breite 109 von 5,5 mm. Der weitere Verbundbereich 108 hat eine zweite Breite 110 von 5 mm. Der erste Verbundbereich 107 und der weitere Verbundbereich 108 sind von einer Längsnaht 111 des Behältervorläufers 102 beinhaltet. Die Längsnaht 111 erstreckt sich über eine gesamte Länge des Behältervorläufers 102. Entlang der Längsnaht 111 sind entgegengesetzte Enden des gefalteten flächenförmigen Verbunds 101 miteinander verbunden, um so den Behältervorläufer 102 zu formen. Zudem beinhaltet der Behältervorläufer 102 einen verschlossenen Bodenbereich. Durch Verschließen des Kopfbereichs 112 unter Verwendung der erfindungsgemäßen Vorrichtung 100 in Figur 1b) kann aus dem Behältervorläufer 102 ein erfindungsgemäßer geschlossener Behälter 700 (siehe Figur 7) hergestellt werden.

Figur 1b) zeigt eine schematische Darstellung einer erfindungsgemäßen Vorrichtung 100, beinhaltend den Behältervorläufer 102 in Figur 1a). Neben dem Behältervorläufer 102 aus dem gefalteten flächenförmigen Verbund 101 beinhaltet die Vorrichtung 100 weiter ein erstes Fixierelement 103 und ein weiteres Fixierelement 104. Das erste Fixierelement 103 ist eine Sonotrode aus einer Titanlegierung. Das weitere Fixierelement 104 ist ein Amboss zu der Sonotrode. Der flächenförmige Verbund 101 ist im Kopfbereich 112 des Behältervorläufers 102 zwischen einer ersten Fixieroberfläche 105 der Sonotrode und einer weiteren Fixieroberfläche 106 des Ambosses eingeklemmt und so fixiert. Der Amboss ist als prismenförmige Leiste mit quadratischer Grundfläche ausgebildet, wobei sich die Leiste senkrecht zur Bildebene längserstreckt. Die weitere Fixieroberfläche 106 ist demnach eben ausgebildet. Die Sonotrode ist messerartig ausgebildet, wobei eine stumpfe "Schneidkante" des "Messers" die erste Fixieroberfläche 105 ist.

Figur 1c) zeigt eine schematische Darstellung einer weiteren erfindungsgemäßen Vorrichtung 100, beinhaltend einen Behältervorläufer 102. Die Vorrichtung 100 in Figur 1c) ist identisch zur der Vorrichtung 100 in Figur 1b), abgesehen davon, dass in Figur 1c) das weitere Fixierelement 104 als Rundrohr ausgebildet ist. Demnach ist die weitere Fixieroberfläche 106 nicht eben, sondern als Teil einer Mantelfläche des Rundrohrs ausgebildet. Das Rundrohr ist in Richtung senkrecht zur Bildebene längserstreckt.

Figur 2 zeigt eine schematische Querschnittsdarstellung der erfindungsgemäßen Vorrichtung 100 aus Figur 1b). Figur 2 zeigt den Bereich im Kopfbereich 112 des flächenförmigen Verbunds 101, welcher zwischen der ersten Fixieroberfläche 105 der Sonotrode und der weiteren Fixieroberfläche 106 des Ambosses fixiert ist im Querschnitt. Der gefaltete flächenförmige Verbund 101 beinhaltet wie in Figur 1a) gezeigt einen ersten Verbundbereich 107 und einen weiteren Verbundbereich 108, die beide von der Längsnaht 111 des Behältervorläufers 102 in Figur 1a) beinhaltet sind. Der erste Verbundbereich 107 beinhaltet eine erste Schichtfolge, beinhaltend als einander überlagernde Schichten in Richtung von der weiteren Fixieroberfläche 106 zu der ersten Fixieroberfläche 105 eine erste Verbundschicht 201, eine zweite Verbundschicht 202, eine dritte Verbundschicht 203 und eine vierte Verbundschicht 204. Die erste Verbundschicht 201 beinhaltet als erste Verbundschichtfolge in Richtung von der weiteren Fixieroberfläche 106 zu der ersten Fixieroberfläche 105 eine erste Polyethylenschicht (nicht gezeigt), eine erste Trägerschicht 205, eine zweite Polyethylenschicht (nicht gezeigt), eine erste Barriereschicht 206 und eine dritte Polyethylenschicht. Die zweite Verbundschicht 202 beinhaltet als zweite Verbundschichtfolge in Richtung von der weiteren Fixieroberfläche 106 zu der ersten Fixieroberfläche 105 eine erste Polyethylenschicht (nicht gezeigt), eine zweite Barriereschicht 207, eine zweite Polyethylenschicht (nicht gezeigt) und eine zweite Trägerschicht 208. Die dritte Verbundschicht 203 beinhaltet als dritte Verbundschichtfolge in Richtung von der weiteren Fixieroberfläche 106 zu der ersten Fixieroberfläche 105 eine dritte Trägerschicht 209, eine erste Polyethylenschicht (nicht gezeigt), eine dritte Barriereschicht 210 und eine zweite Polyethylenschicht (nicht gezeigt). Die vierte Verbundschicht 204 als vierte Verbundschichtfolge in Richtung von der weiteren Fixieroberfläche 106 zu der ersten Fixieroberfläche 105 eine erste Polyethylenschicht (nicht gezeigt), eine vierte Barriereschicht 211, eine zweite Polyethylenschicht (nicht gezeigt), eine vierte Trägerschicht 212 und eine dritte Polyethylenschicht (nicht gezeigt). In dem ersten Verbundbereich 107 sind die zweite Verbundschicht 202 und die dritte Verbundschicht 203 miteinander nicht verbunden. Zwischen diesen beiden Schichten besteht ein Hohlraum, und keine weitere Schicht des flächenförmigen Verbunds 101. Ferner ist die dritte Verbundschicht 203 mit der vierten Verbundschicht 204 durch eine Siegelung der zweiten Polyethylenschicht der dritten Verbundschicht 203 und der ersten Polyethylenschicht der vierten Verbundschicht 204 verbunden. In dem ersten Verbundbereich sind die zweite Trägerschicht 208 und die dritte Trägerschicht 209 jeweils gekennzeichnet ist durch eine um einen Faktor 0,5 kleinere Schichtdicke als jeweils die erste Trägerschicht 205 und die vierte Trägerschicht 212. Der zweite Verbundbereich 108 beinhaltet eine zweite Schichtfolge, beinhaltend als einander überlagernde Schichten in Richtung von der weiteren Fixieroberfläche 106 zu der ersten Fixieroberfläche 105 die erste Verbundschicht 201, die zweite Verbundschicht 202, und die vierte Verbundschicht 204. In dem zweiten Verbundbereich 108 ist die dritte Verbundschicht 203 mit der vierten Verbundschicht 204 durch eine Siegelung der zweiten Polyethylenschicht der dritten Verbundschicht 203 und der ersten Polyethylenschicht der vierten Verbundschicht 204 verbunden. In dem zweiten Verbundbereich 108 ist die zweite Trägerschicht 208 gekennzeichnet durch eine um einen Faktor 2 größere Schichtdicke als die Schichtdicke derselben zweiten Trägerschicht 208 in dem ersten Verbundbereich 107. Die zweite Verbundschicht 202 geht an der in Figur 2 dargestellten Faltstelle in die dritte Verbundschicht 203 über. In dem ersten Verbundbereich 107 und in dem weiteren Verbundbereich 108 gehen die vier Verbundschichten 201, 202, 203 und 204 jedoch nicht derartig ineinander über, sondern bilden wie oben beschrieben je Verbundbereich 107, 108 eine Schichtfolge. In dem ersten Verbundbereich 107 sind die zweite Trägerschicht 208 und die dritte Trägerschicht 209 geschält, nicht jedoch die erste Trägerschicht 205 und die vierte Trägerschicht 212. In dem zweiten Verbundbereich 108 ist keine der vorgenannten Trägerschichten geschält. Alle in Figur 2 vorkommenden Barriereschichten 206, 207, 210, 211 bestehen aus Aluminium EN A W 8079 von der Hydro Aluminium Deutschland GmbH. Diese Barriereschichten 206, 207, 210, 211 haben jeweils eine Schichtdicke von 6 µm und sind einstückig miteinander ausgebildet. Diese Barriereschichten 206, 207, 210, 211 gehören zu dem flächenförmigen Verbund 101 und gehen jeweils an Faltungen ineinander über. Für die zweite Barriereschicht 207 und die dritte Barriereschicht 210 ist dies mit der Faltung in Figur 2 dargestellt. Ebenso gilt, alle in Figur 2 vorkommenden Trägerschichten 205, 208, 209, 212 sind einstückig miteinander ausgebildet. Diese Trägerschichten 205, 208, 209, 212 gehören zu dem flächenförmigen Verbund 101 und gehen jeweils an Faltungen ineinander über. Für die zweite Trägerschicht 208 und die dritte Trägerschicht 209 ist dies mit der Faltung in Figur 2 dargestellt. Weitere Faltungen des flächenförmigen Verbunds 101 sind in Figur 2 nicht dargestellt, können jedoch Figur 1a) entnommen werden. Zum Herstellen des Behältervorläufers 102 in Figur 1a) wurde ein Trägermaterial (Stora Enso Natura T Duplex Doppelstrich von Stora Enso Oyj AG, Scott-Bond-Wert von 200 J/m², Restfeuchte 7,5 %) mit jeweils einem "Strich" auf beiden Trägerseiten verwendet. Demnach beinhalten grundsätzlich beide Schichtoberflächen jeder Trägerschicht 205, 208, 209, 212 in Figur 2 einen "Strich". Geschälte Schichtoberflächen beinhalten jedoch keinen "Strich". Somit beinhaltet die der dritten Trägerschicht 209 zugewandte Schichtoberfläche der zweiten Trägerschicht 208 in dem ersten Verbundbereich 107 keinen "Strich". Weiter in dem ersten Verbundbereich 107 beinhaltet die der zweiten Trägerschicht 208 zugwandte Schichtoberfläche der dritten Trägerschicht 209 keinen "Strich". Alle vorgenannten Polyethylenschichten bestehen aus LDPE 19N430 von der Ineos Köln GmbH. Das weitere Fixierelement 104, der Amboss, beinhaltet eine Aussparung 213, welche eine Vertiefung in der weiteren Fixieroberfläche 106 ist. Der erste Verbundbereich 107 und der weitere Verbundbereich 108 befinden sich so zwischen der Aussparung 213 und der ersten Fixieroberfläche 105, dass bei einem Verpressen des flächenförmigen Verbunds 101 zwischen der ersten Fixieroberfläche 105 und der weiteren Fixieroberfläche 106 jeweils ein Teil der Schichtfolgen des ersten Verbundbereichs 107 und des weiteren Verbundbereichs 108 in die Aussparung 213 gedrückt werden. Hierbei ist zu beachten, dass eine verdickte Seite der Längsnaht 111, in Figur 2 die obere Seite des flächenförmigen Verbund 101, nicht der weiteren Fixieroberfläche 106 mit der Aussparung 213 zugewandt ist, sondern vielmehr der ersten Fixieroberfläche 105, welche keine Aussparung 213 beinhaltet zugewandt ist.

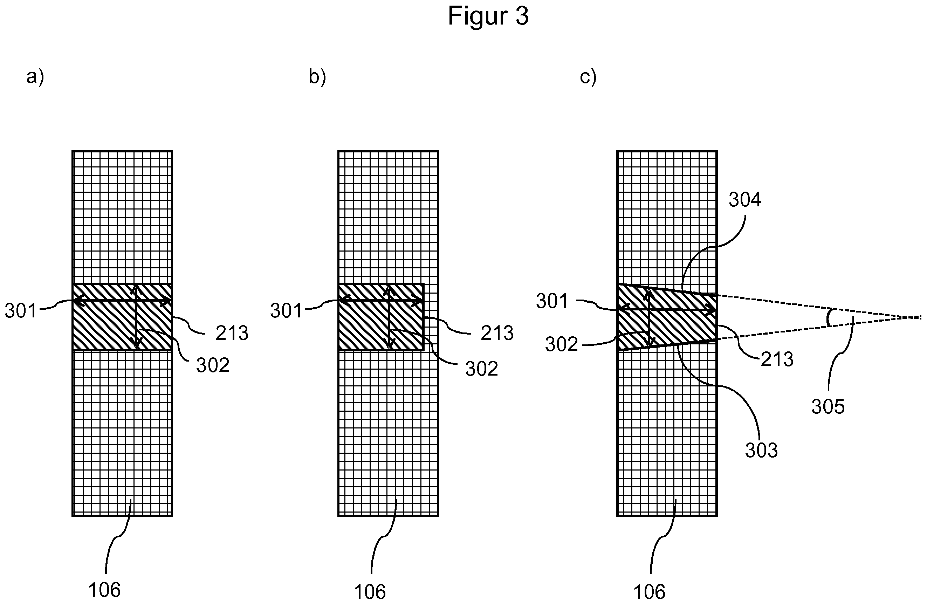

Figur 3a) zeigt eine schematische Draufsicht einer erfindungsgemäßen weiteren Fixieroberfläche 106 eines weiteren Fixierelements 104. Die weitere Fixieroberfläche 106 ist eine rechteckige ebene Seitenfläche eines quaderförmigen weiteren Fixierelements 104. Die weitere Fixieroberfläche 106 beinhaltet eine Aussparung 213, welche sich von einer Kante des weiteren Fixierelements 104 zu einer gegenüberliegenden Kante erstreckt. Die Aussparung 213 hat eine Länge 301 in Richtung eines Umfangs des weiteren Fixierelements 104. Die Länge 301 beträgt 30 % des Umfangs. Ferner hat die Aussparung 213 eine Breite 302.

Figur 3b) zeigt eine schematische Draufsicht einer erfindungsgemäßen weiteren Fixieroberfläche 106 eines weiteren Fixierelements 104. Die weitere Fixieroberfläche 106 ist eine rechteckige ebene Seitenfläche eines quaderförmigen weiteren Fixierelements 104. Die weitere Fixieroberfläche 106 beinhaltet eine Aussparung 213, welche sich von einer Kante des weiteren Fixierelements 104 nicht bis zu einer gegenüberliegenden Kante erstreckt. Die Aussparung 213 hat eine Länge 301 in Richtung eines Umfangs des weiteren Fixierelements 104. Die Länge 301 beträgt 20 % des Umfangs. Ferner hat die Aussparung 213 eine Breite 302.

Figur 3c) zeigt eine schematische Draufsicht einer erfindungsgemäßen weiteren Fixieroberfläche 106 eines weiteren Fixierelements 104. Die weitere Fixieroberfläche 106 ist eine rechteckige ebene Seitenfläche eines quaderförmigen weiteren Fixierelements 104. Die weitere Fixieroberfläche 106 beinhaltet eine Aussparung 213, welche sich von einer Kante des weiteren Fixierelements 104 zu einer gegenüberliegenden Kante erstreckt. Die Aussparung 213 hat eine Länge 301 in Richtung eines Umfangs des weiteren Fixierelements 104. Die Länge 301 beträgt 30 % des Umfangs. Ferner hat die Aussparung 213 eine Breite 302, welche entlang des Umfangs weniger wird. Weiter wird die Aussparung 213 auf einander gegenüberliegenden Seiten der Aussparung 213 durch einen ersten Rand 304 und einen weiteren Rand 303 begrenzt. Der erste Rand 304 beinhaltet einen geraden ersten Randabschnitt 304 und der weitere Rand 303 einen geraden weiteren Randabschnitt 303. Der gerade erste Randabschnitt 304 und der gerade weitere Randabschnitt 303 schließen einen Winkel 305 von 20° ein.

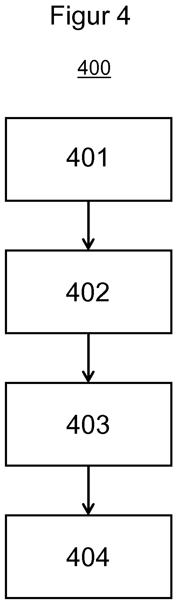

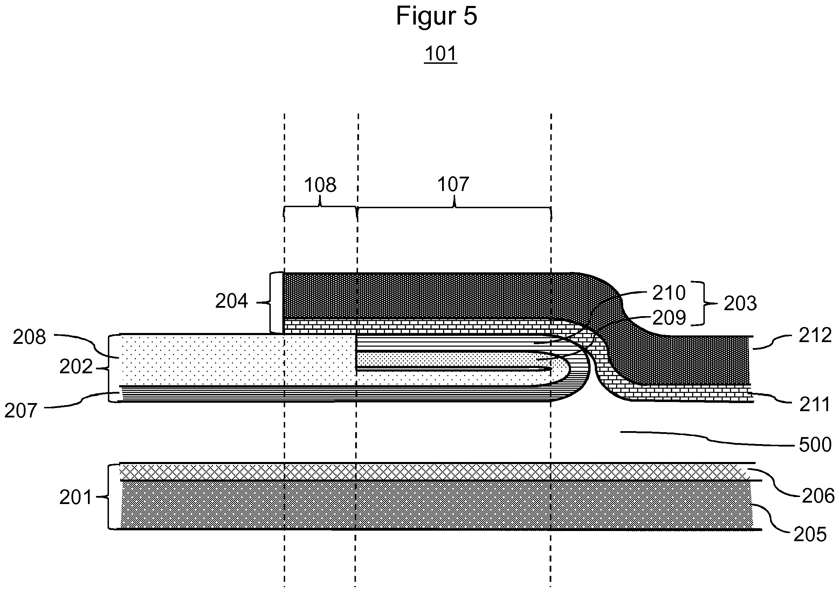

Figur 4 zeigt ein Ablaufdiagramm eines erfindungsgemäßen Verfahrens 400. Durch das Verfahren 400 kann der geschlossene Behälter 700 in Figur 7 hergestellt werden. Das Verfahren 400 beinhaltet einen Verfahrensschritt a) 401: Bereitstellen eines gefalteten flächenförmigen Verbunds 101 gemäß Figur 5. In einem Verfahrensschritt b) 402 werden ein erstes Fixierelement 103, beinhaltend eine erste Fixieroberfläche 105, und ein weiteres Fixierelement 104, beinhaltend eine weitere Fixieroberfläche 106 bereitgestellt. Das erste Fixierelement 103 ist eine Sonotrode aus einer Titanlegierung. Das weitere Fixierelement 104 ist ein Amboss zu der Sonotrode. Dabei beinhaltet die weitere Fixieroberfläche 106 eine Aussparung 213. In einem Verfahrensschritt c) 403 werden die vierte Verbundschicht 204 des flächenförmigen Verbunds 101 und die erste Fixieroberfläche 105, sowie die erste Verbundschicht 201 und die weitere Fixieroberfläche 106, sowie die erste Verbundschicht 201 und die zweite Verbundschicht 202 jeweils miteinander kontaktiert durch ein Verpressen des flächenförmigen Verbunds 101 zwischen der ersten Fixieroberfläche 105 und der weiteren Fixieroberfläche 106. Hierbei befinden sich der erste Verbundbereich 107 und der weitere Verbundbereich 108 zwischen oder in der Aussparung 213 und der ersten Fixieroberfläche 105. Die Anordnung des flächenförmigen Verbunds 101 sowie der beiden Fixierelemente 103, 104 bei dem Kontaktieren des Verfahrensschritts c) 403 entspricht der Anordnung der Vorrichtung 100 in Figur 2. In einem Verfahrensschritt d) 404 wird die erste Verbundschicht 201 mit der zweiten Verbundschicht 202 verbunden. Hierzu wird eine Ultraschalllschwingung von der Sonotrode auf den flächenförmigen Verbund 101 übertragen. Die Ultraschallschwingung wird bei 30 kHz und einer Amplitude von 10 µm für 200 ms angeregt. Hierdurch wird die dritte Polyethylenschicht der ersten Verbundschicht 201, d.h. die Polyethylenschicht, welche die erste Barriereschicht 206, auf einer der ersten Trägerschicht 205 abgewandten Seite überlagert, auf eine Temperatur oberhalb ihrer Schmelztemperatur erwärmt. Das Verbinden ist demnach ein Siegeln mit dieser Polyethylenschicht. Durch dieses Siegeln wird der Kopfbereich 112 des Behältervorläufers 102 verschlossen und somit ein geschlossener Behälter 700 erhalten.

Figur 5 zeigt eine schematische Querschnittsdarstellung eines für das erfindungsgemäße Verfahren 400 aus Figur 4 bereitgestellten gefalteten flächenförmigen Verbunds 101. Der gefaltete flächenförmige Verbund 101 ist so gefaltet und gesiegelt, dass er einen Behältervorläufer 102 gemäß Figur 1a) mit einer Längsnaht 111 bildet. Hierbei ist der Behältervorläufer 102 in seinem Kopfbereich 112 offen. Der gefaltete flächenförmige Verbund 101 beinhaltet eine erste Verbundschicht 201, eine zweite Verbundschicht 202, eine dritte Verbundschicht 203, eine vierte Verbundschicht 204 und einen ersten Verbundbereich 107 und einen weiteren Verbundbereich 108. Der erste Verbundbereich 107 hat eine erste Breite 109 von 6 mm. Der weitere Verbundbereich 108 hat eine zweite Breite 110 von 4 mm. Zwischen der ersten Verbundschicht 201 und der zweiten Verbundschicht 202 befindet sich ein Zwischenbereich 500. Hierdurch ist der Behältervorläufer 102 wie oben erwähnt in seinem Kopfbereich 112 offen. Der Betrachter von Figur 5 blickt demnach in den geöffneten Behältervorläufer 102 hinein, wenn er auf den Zwischenbereich 500 schaut. Der Aufbau der vier Verbundschichten 201, 202, 203, 204 entspricht dem Aufbau der gleichnamigen Verbundschichten 201, 202, 203, 204 in Figur 2. Der erste Verbundbereich 107 beinhaltet eine erste Schichtfolge, beinhaltend als einander überlagernde Schichten in Richtung von dem Zwischenbereich 500 durch die erste Schichtfolge die zweite Verbundschicht 202, die dritte Verbundschicht 203 und die vierte Verbundschicht 204. In dem ersten Verbundbereich 107 ist die zweite Verbundschicht 202 mit der dritten Verbundschicht 203 nicht verbunden. Jedoch ist die dritte Verbundschicht 203 mit der vierten Verbundschicht 204 gesiegelt verbunden. In dem ersten Verbundbereich 107 sind jeweils die zweite Trägerschicht 208 und die dritte Trägerschicht 209 gekennzeichnet durch eine kleinere Schichtdicke als jeweils die erste Trägerschicht 205 und die vierte Trägerschicht 212. Der weitere Verbundbereich 108 beinhaltet eine zweite Schichtfolge, beinhaltend als einander überlagernde Schichten in Richtung von dem Zwischenbereich 500 durch die zweite Schichtfolge die zweite Verbundschicht 202 und die vierte Verbundschicht 204. In dem weiteren Verbundbereich 108 ist die zweite Verbundschicht 202 gesiegelt mit der vierten Verbundschicht 204 verbunden. In dem weiteren Verbundbereich 108 ist die zweite Trägerschicht 208 gekennzeichnet durch eine größere Schichtdicke als in dem ersten Verbundbereich 107. Der erste Verbundbereich 107 grenzt an den weiteren Verbundbereich 108 an.

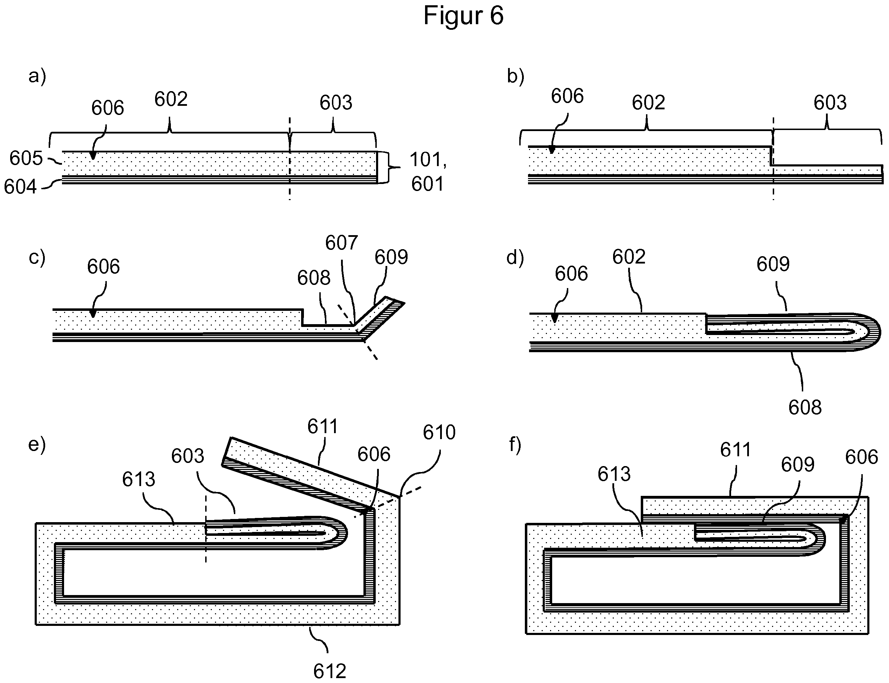

Figur 6a) zeigt eine schematische Illustration eines Verfahrensschritts i) eines erfindungsgemäßen Verfahrens 400. In dem Verfahrensschritt i) wird ein flächenförmiger Verbund 101 bereitgestellt. Der flächenförmige Verbund 101 beinhaltet eine Schichtfolge 601. Die Schichtfolge 601 beinhaltet als einander überlagernde Schichten eine Verbundträgerschicht 605 und eine Verbundbarriereschicht 604. Die Verbundbarriereschicht 604 ist eine Aluminiumschicht (Aluminium EN A W 8079 von der Hydro Aluminium Deutschland GmbH). Die Verbundträgerschicht 605 ist eine Kartonschicht (Stora Enso Natura T Duplex Doppelstrich von Stora Enso Oyj AG, Scott-Bond-Wert von 200 J/m², Restfeuchte 7,5 %). Zwischen der Verbundträgerschicht 605 und der Verbundbarriereschicht 604 befindet sich eine Polyethylenschicht (nicht dargestellt, LDPE 19N430 von der Ineos Köln GmbH). Der flächenförmige Verbund 101 kann in einen Randbereich 603 und einen Innenbereich 602 aufgeteilt werden. Der Randbereich 603 grenzt an den Innenbereich 602 an der in Figur 6a) gestrichelten Linie an. In dem Innenbereich 602 beinhaltet der flächenförmige Verbund 101 eine Rillung 606. Durch die in den Figuren 6a) bis f) illustrierten Verfahrensschritte i) bis vi) wird das Bereitstellen des flächenförmigen Verbunds 101 in Verfahrensschritt a) 401 eines erfindungsgemäßen Verfahrens 400 realisiert.

Figur 6b) zeigt eine schematische Illustration eines Verfahrensschritts ii) eines erfindungsgemäßen Verfahrens 400. Das Verfahren 400 ist dasselbe Verfahren 400 wie in Figur 6a). Der Verfahrensschritt ii) beinhaltet ein Verringern einer Schichtdicke der Verbundträgerschicht 605 in dem Randbereich 603. Das Verringern erfolgt hierbei als ein Schälen der Verbundträgerschicht 605 mit einem rotierenden Topfmesser. Dies geschieht mit einem Schälwerk Modell VN 50 der Firma Fortuna Spezialmaschinen GmbH, Weil der Stadt, Deutschland. Dadurch wird die Schichtdicke der Verbundträgerschicht 605 um 50 % der ursprünglichen Schichtdicke verringert.

Figur 6c) zeigt eine schematische Illustration eines Verfahrensschritts iii) eines erfindungsgemäßen Verfahrens 400. Das Verfahren 400 ist dasselbe Verfahren 400 wie in Figur 6a). In dem Verfahrensschritt iii) wird eine Faltung 607 in dem Randbereich 603 erzeugt und somit ein erster Randfaltbereich 608 und ein weiterer Randfaltbereich 609 erhalten. Der erste Randfaltbereich 608 und der weitere Randfaltbereich 609 grenzen entlang der Faltung 607 aneinander an.

Figur 6d) zeigt eine schematische Illustration eines Verfahrensschritts iv) eines erfindungsgemäßen Verfahrens 400. Das Verfahren 400 ist dasselbe Verfahren 400 wie in Figur 6a). Der Verfahrensschritt iv) beinhaltet ein Kontaktieren einer Oberfläche des ersten Randfaltbereichs 608 mit einer Oberfläche des weiteren Randfaltbereichs 609. Hierzu wird der erste Randfaltbereich 608 entlang der Faltung 607 umgeklappt und auf den weiteren Randfaltbereich 609 gelegt und verpresst.

Figur 6e) zeigt eine schematische Illustration eines Verfahrensschritts v) eines erfindungsgemäßen Verfahrens 400. Das Verfahren 400 ist dasselbe Verfahren 400 wie in Figur 6a). Der Verfahrensschritt v) beinhaltet ein Erzeugen einer weiteren Faltung 610 entlang der Rillung 606 in dem Innenbereich 602 unter Erhalten eines ersten Verbundfaltbereichs 611 und eines weiteren Verbundfaltbereichs 612. Hierbei beinhaltet der weitere Verbundfaltbereich 612 einen Teil 613 des Innenbereichs 602.

Figur 6f) zeigt eine schematische Illustration eines Verfahrensschritts vi) eines erfindungsgemäßen Verfahrens 400. Das Verfahren 400 ist dasselbe Verfahren 400 wie in Figur 6a). Der Verfahrensschritt vi) beinhaltet ein Verbinden des ersten Verbundfaltbereichs 611 mit dem weiteren Randfaltbereichs 609 und dem Teil 613 des Innenbereichs 602. Dabei erfolgt das Verbinden als ein Siegeln. Das Siegeln erfolgt als Kontaktieren, Erwärmen auf eine Siegeltemperatur und Verpressen. Dabei erfolgt das Erwärmen durch ein Anblasen mit Heißluft. Somit wird in den Verfahrensschritten i) bis vi) des Verfahrens 400 durch Falten des flächenförmigen Verbunds 101 und Erzeugen einer Längsnaht 111 ein Behältervorläufer 102 hergestellt.

Figur 7 zeigt eine schematische Darstellung eines erfindungsgemäßen geschlossenen Behälters 700. Der geschlossene Behälter 700 ist erhältlich durch das Verfahren 400 in Figur 4. Der geschlossene Behälter 700 besteht aus einem einstückig ausgebildeten und gefalteten flächenförmigen Verbund 101. Der geschlossene Behälter 700 umgibt einen Innenraum 113, welcher ein Nahrungsmittel beinhaltet. Durch das Verfahren 400 in Figur 4 wurde der Behälter 700 in seinem Kopfbereich 112 verschlossen. Dieses Verschließen geschah durch Ultraschallsiegeln und somit Erzeugen einer Kopfnaht 701.

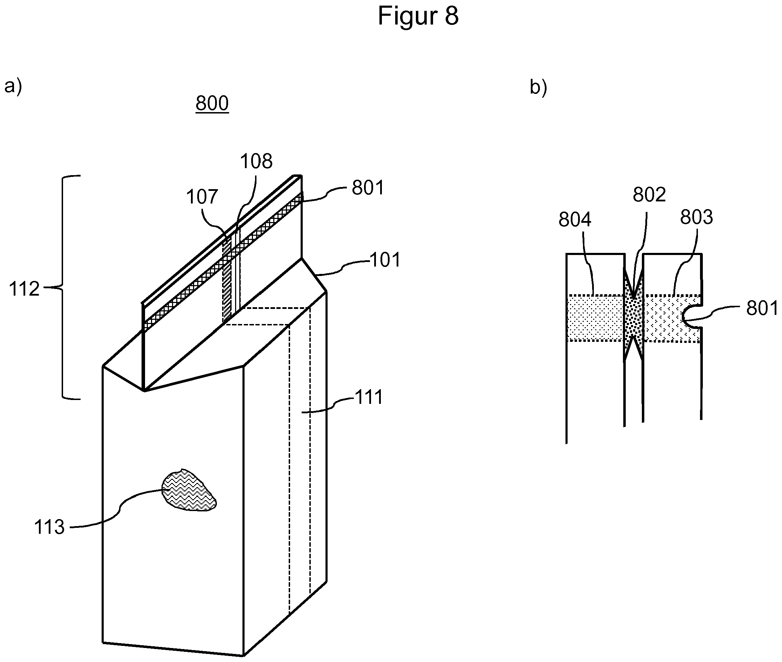

Figur 8a) zeigt eine schematische Darstellung eines weiteren geschlossenen Behälters 800. Dieser besteht aus einem gefalteten flächenförmigen Verbund 101. Ferner umgibt der Behälter 800 einen Innenraum 113, welcher ein Nahrungsmittel beinhaltet. In einem über eine Naht 802 verschlossenen Kopfbereich 112, auch Giebelbereich genannt, beinhaltet der Behälter 800 einen ersten Verbundbereich 107 und einen weiteren Verbundbereich 108. Der erste Verbundbereich 107 hat eine erste Breite 109 von 6,5 mm. Der weitere Verbundbereich 108 hat eine weitere Breite 110 von 4 mm. Der erste Verbundbereich 107 und der weitere Verbundbereich 108 sind von einer Längsnaht 111 des Behälters 1300 beinhaltet. Die Längsnaht 111 erstreckt sich über eine gesamte Länge des Behälters 800. Entlang der Längsnaht 111 sind entgegengesetzte Enden des gefalteten flächenförmigen Verbunds 101 miteinander verbunden, um so den Behälter 800 zu formen. Eine Vertiefung 801 in dem flächenförmigen Verbund 101, genauer in einem ersten Nahtbereich 801 des flächenförmigen Verbunds 101 verläuft entlang der Naht 802 (gezeigt in Figur 8b)). Die Naht 802 und die Vertiefung 801 kreuzen die Längsnaht 111. Die Vertiefung 801 hat eine Breite von 3 mm. Der gefaltete flächenförmige Verbund 101 umgibt den Innenraum 113 allseitig, wobei der flächenförmige Verbund 101 einstückig ausgebildet ist.

Figur 8b) zeigt einen schematischen Querschnitt durch die Naht 802 und die Vertiefung 801 des geschlossenen Behälters 800 in Figur 8a). Die Vertiefung 801 hat eine Tiefe von 0,5 mm. Ein erster Nahtbereich 803 und ein weiterer Nahtbereich 804 sind entlang der Naht 802 miteinander verbunden. Der erste Nahtbereich 803 weist entlang der Naht 802 die Vertiefung 801 auf.

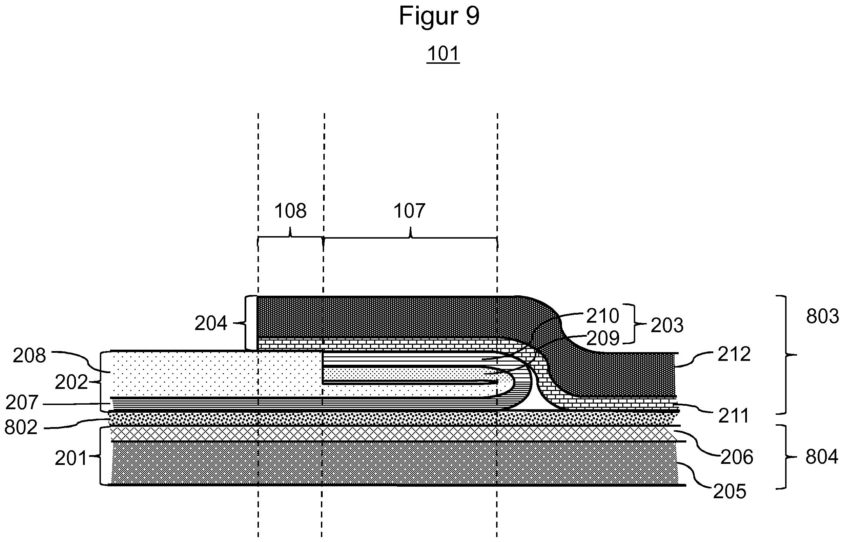

Figur 9 zeigt einen schematischen Längsschnitt durch die Naht 1802 und die Vertiefung 801 des geschlossenen Behälters 800 in Figur 8a). Der weitere Nahtbereich 804 beinhaltet eine erste Verbundschicht 201. Der erste Nahtbereich 803 beinhaltet eine zweite Verbundschicht 202, eine dritte Verbundschicht 203, eine vierte Verbundschicht 204 und einen ersten Verbundbereich 107 und einen weiteren Verbundbereich 108. Zwischen der ersten Verbundschicht 201 und der zweiten Verbundschicht 202 befindet sich die Naht 802, welche aus gesiegeltem Polyethylen (LDPE 19N430 von der Ineos Köln GmbH) besteht. Der erste Verbundbereich 107 hat eine erste Breite 109. Der weitere Verbundbereich 108 hat eine weitere Breite 110. Der Aufbau der vier Verbundschichten 201, 202, 203, 204 entspricht dem Aufbau der gleichnamigen Verbundschichten 201, 202, 203, 204 in Figur 2. Der erste Verbundbereich 107 beinhaltet eine erste Schichtfolge, beinhaltend als einander überlagernde Schichten in Richtung von der Naht 802 durch die erste Schichtfolge die zweite Verbundschicht 202, die dritte Verbundschicht 203 und die vierte Verbundschicht 204. In dem ersten Verbundbereich 107 ist die zweite Verbundschicht 202 mit der dritten Verbundschicht 203 nicht verbunden sowie die dritte Verbundschicht 203 mit der vierten Verbundschicht 204 verbunden. Bezogen auf den ersten Verbundbereich 107 sind die zweite Trägerschicht 208 und die dritte Trägerschicht 209 gekennzeichnet durch eine kleinere Schichtdicke als die vierte Trägerschicht 212. Der weitere Verbundbereich 108 beinhaltet eine zweite Schichtfolge, beinhaltend als einander überlagernde Schichten in Richtung von der Naht 802 durch die zweite Schichtfolge die zweite Verbundschicht 202 und die vierte Verbundschicht 204. In dem weiteren Verbundbereich 108 ist die zweite Verbundschicht 202 mit der vierten Verbundschicht 204 verbunden. Bezogen auf den weiteren Verbundbereich 108 ist die zweite Trägerschicht 208 gekennzeichnet durch eine größere Schichtdicke in dem ersten Verbundbereich 107. Der erste Verbundbereich 107 grenzt an den weiteren Verbundbereich 108 an.

### Liste der Bezugszeichen

- 100: erfindungsgemäße Vorrichtung
- 101: flächenförmiger Verbund
- 102: Behältervorläufer
- 103: erstes Fixierelement
- 104: weiteres Fixierelement
- 105: erste Fixieroberfläche
- 106: weitere Fixieroberfläche
- 107: erster Verbundbereich
- 108: weiterer Verbundbereich
- 109: erste Breite
- 110: weitere Breite
- 111: Längsnaht
- 112: Kopfbereich
- 113: Innenraum
- 201: erste Verbundschicht
- 202: zweite Verbundschicht
- 203: dritte Verbundschicht
- 204: vierte Verbundschicht
- 205: erste Trägerschicht
- 206: erste Barriereschicht
- 207: zweite Barriereschicht
- 208: zweite Trägerschicht
- 209: dritte Trägerschicht
- 210: dritte Barriereschicht
- 211: vierte Barriereschicht
- 212: vierte Trägerschicht
- 213: Aussparung
- 214: Tiefe
- 301: Länge
- 302: Breite
- 303: weiterer Rand / gerader weiterer Randabschnitt
- 304: erster Rand / gerader erster Randabschnitt
- 305: Winkel
- 400: erfindungsgemäßes Verfahren
- 401: Verfahrensschritt a)
- 402: Verfahrensschritt b)
- 403: Verfahrensschritt c)
- 404: Verfahrensschritt d)
- 500: Zwischenbereich
- 601: Schichtfolge
- 602: Innenbereich
- 603: Randbereich
- 604: Verbundbarriereschicht
- 605: Verbundträgerschicht
- 606: Rillung
- 607: Faltung
- 608: erster Randfaltbereich
- 609: weiterer Randfaltbereich
- 610: weitere Faltung
- 611: erster Verbundfaltbereich
- 612: weiterer Verbundfaltbereich
- 613: Teil des Innenbereichs
- 700: erfindungsgemäßer geschlossener Behälter
- 701: Kopfnaht
- 800: geschlossener Behälter
- 801: Vertiefung
- 802: Naht
- 803: erster Nahtbereich
- 804: weiterer Nahtbereich

## Patentansprüche

1. Eine Vorrichtung (100) beinhaltend ein erstes Fixierelement (103), ein weiteres Fixierelement (104) und einen gefalteten flächenförmigen Verbund (101);
wobei das erste Fixierelement (103) eine erste Fixieroberfläche (105) beinhaltet und das weitere Fixierelement (104) eine weitere Fixieroberfläche (106) beinhaltet;
wobei der gefaltete flächenförmige Verbund (101) zwischen der ersten Fixieroberfläche (105) und der weiteren Fixieroberfläche (106) mindestens teilweise fixiert ist;
wobei der gefaltete flächenförmige Verbund (101) einen ersten Verbundbereich (107) und einen weiteren Verbundbereich (108) beinhaltet;
wobei der erste Verbundbereich (107) eine erste Schichtfolge, beinhaltend als einander überlagernde Schichten in Richtung von der weiteren Fixieroberfläche (106) zu der ersten Fixieroberfläche (105) eine erste Verbundschicht (201), eine zweite Verbundschicht (202), eine dritte Verbundschicht (203) und eine vierte Verbundschicht (204) beinhaltet;
wobei in dem ersten Verbundbereich (107) die dritte Verbundschicht (203) mit der vierten Verbundschicht (204) verbunden ist;
wobei der weitere Verbundbereich (108) eine weitere Schichtfolge, beinhaltend als einander überlagernde Schichten in Richtung von der weiteren Fixieroberfläche (106) zu der ersten Fixieroberfläche (105) die erste Verbundschicht (201), die zweite Verbundschicht (202) und die vierte Verbundschicht (204), beinhaltet;
wobei in dem weiteren Verbundbereich (108) die zweite Verbundschicht (202) mit der vierten Verbundschicht (204) verbunden ist;
wobei der weitere Verbundbereich (108) an den ersten Verbundbereich (107) angrenzt;
wobei die erste Verbundschicht (201) eine erste Trägerschicht (205) beinhaltet;
wobei die zweite Verbundschicht (202) eine zweite Trägerschicht (208) beinhaltet;
wobei die dritte Verbundschicht (203) eine dritte Trägerschicht (209) beinhaltet;
wobei die vierte Verbundschicht (204) eine vierte Trägerschicht (212) beinhaltet; wo
bei in dem ersten Verbundbereich (107) die erste Trägerschicht (205) oder die vierte Trägerschicht (212) oder jeweils beide **gekennzeichnet ist durch** eine größere Schichtdicke als die zweite Trägerschicht (208) oder die dritte Trägerschicht (209) oder jeweils beide;
wobei in dem weiteren Verbundbereich (108) die zweite Trägerschicht (208) **gekennzeichnet ist durch** eine größere Schichtdicke als in dem ersten Verbundbereich (107);
wobei die weitere Fixieroberfläche (106) eine Aussparung (213) beinhaltet;
wobei sich der erste Verbundbereich (107) und der weitere Verbundbereich (108) jeweils mindestens teilweise zwischen der Aussparung (213) und der ersten Fixieroberfläche (105) befinden.

2. Die Vorrichtung (100) nach Anspruch 1, wobei die erste Verbundschicht (201) als erste Verbundschichtfolge in Richtung von der weiteren Fixieroberfläche (106) zu der ersten Fixieroberfläche (105) die erste Trägerschicht (205) und eine erste Barriereschicht (206) beinhaltet;
wobei die zweite Verbundschicht (202) als zweite Verbundschichtfolge in Richtung von der weiteren Fixieroberfläche (106) zu der ersten Fixieroberfläche (105) eine zweite Barriereschicht (207) und die zweite Trägerschicht (208) beinhaltet;
wobei die dritte Verbundschicht (203) als dritte Verbundschichtfolge in Richtung von der weiteren Fixieroberfläche (106) zu der ersten Fixieroberfläche (105) die dritte Trägerschicht (209) und eine dritte Barriereschicht (210) beinhaltet;
wobei die vierte Verbundschicht (204) als vierte Verbundschichtfolge in Richtung von der weiteren Fixieroberfläche (106) zu der ersten Fixieroberfläche (105) eine vierte Barriereschicht (211) und die vierte Trägerschicht (212) beinhaltet.

3. Die Vorrichtung (100) nach einem der vorhergehenden Ansprüche, wobei das erste Fixierelement (103) oder das weitere Fixierelement (104) oder beide eine Sonotrode ist.

4. Die Vorrichtung (100) nach Anspruch 3, wobei die Sonotrode eines ausgewählt aus der Gruppe bestehend aus einer Legierung, beinhaltend zu mindestens 90 Gew.-% Titan oder Aluminium oder beides, bezogen auf das Gewicht der Legierung; einem Stahl; und einer Piezokeramik oder eine Kombination aus mindestens zwei davon beinhaltet.

5. Die Vorrichtung (100) nach einem der vorhergehenden Ansprüche, wobei der erste Verbundbereich (107) **gekennzeichnet ist durch** eine erste Breite (109);
wobei die erste Breite (109) in einem Bereich von 1 bis 10 mm liegt.

6. Die Vorrichtung (100) nach einem der vorhergehenden Ansprüche, wobei der weitere Verbundbereich (108) **gekennzeichnet ist durch** eine weitere Breite (110);
wobei die weitere Breite (110) in einem Bereich von 1 bis 10 mm liegt.

7. Die Vorrichtung (100) nach einem der vorhergehenden Ansprüche, wobei die Aussparung (213) eine Tiefe (214) in einem Bereich von 0,1 bis 5 mm hat.

8. Ein Verfahren (400) beinhaltend als Verfahrensschritte (401 bis 404)
a) Bereitstellen eines gefalteten flächenförmigen Verbunds (101),
wobei der gefaltete flächenförmige Verbund (101) eine erste Verbundschicht (201), eine zweite Verbundschicht (202), eine dritte Verbundschicht (203), eine vierte Verbundschicht (204), einen ersten Verbundbereich (107) und einen weiteren Verbundbereich (108) beinhaltet;
wobei sich zwischen der ersten Verbundschicht (201) und der zweiten Verbundschicht (202) ein Zwischenbereich (500) befindet;
wobei die erste Verbundschicht (201) eine erste Trägerschicht (205) beinhaltet;
wobei die zweite Verbundschicht (202) eine zweite Trägerschicht (208) beinhaltet;
wobei die dritte Verbundschicht (203) eine dritte Trägerschicht (209) beinhaltet;
wobei die vierte Verbundschicht (204) eine vierte Trägerschicht (212) beinhaltet;
wobei der erste Verbundbereich (107) eine erste Schichtfolge, beinhaltend als einander überlagernde Schichten in Richtung von dem Zwischenbereich (500) durch die erste Schichtfolge die zweite Verbundschicht (202), die dritte Verbundschicht (203) und die vierte Verbundschicht (204) beinhaltet;
wobei in dem ersten Verbundbereich (107) die dritte Verbundschicht (203) mit der vierten Verbundschicht (204) verbunden ist;
wobei in dem ersten Verbundbereich (107) die erste Trägerschicht (205) oder die vierte Trägerschicht (212) oder jeweils beide **gekennzeichnet ist durch** eine größere Schichtdicke als die zweite Trägerschicht (208) oder die dritte Trägerschicht (209) oder jeweils beide;
wobei der weitere Verbundbereich (108) eine weitere Schichtfolge, beinhaltend als einander überlagernde Schichten in Richtung von dem Zwischenbereich (500) durch die weitere Schichtfolge die zweite Verbundschicht (202) und die vierte Verbundschicht (204) beinhaltet;
wobei in dem weiteren Verbundbereich (108) die zweite Verbundschicht (202) mit der vierten Verbundschicht (204) verbunden ist;
wobei in dem weiteren Verbundbereich (108) die zweite Trägerschicht (208) **gekennzeichnet ist durch** eine größere Schichtdicke als in dem ersten Verbundbereich (107);
b) Bereitstellen eines ersten Fixierelements (103), beinhaltend eine erste Fixieroberfläche (105), und eines weiteren Fixierelements (104), beinhaltend eine weitere Fixieroberfläche (106);
wobei die weitere Fixieroberfläche (106) eine Aussparung (213) beinhaltet;
c) Kontaktieren der vierten Verbundschicht (204) mit der ersten Fixieroberfläche (105), der ersten Verbundschicht (201) mit der weiteren Fixieroberfläche (106), und der ersten Verbundschicht (201) mit der zweiten Verbundschicht (202);
wobei sich der erste Verbundbereich (107) und der weitere Verbundbereich (108) jeweils mindestens teilweise zwischen der Aussparung (213) und der ersten Fixieroberfläche (105) befinden; und
d) Verbinden der ersten Verbundschicht (201) mit der zweiten Verbundschicht (202).

9. Das Verfahren (400) nach Anspruch 8, wobei in Verfahrensschritt d) (404) die erste Fixieroberfläche (105) oder die weitere Fixieroberfläche (106) oder beide gegen den flächenförmigen Verbund (101) mit
a) einer Frequenz in einem Bereich von 10 bis 50 kHz, oder
b) einer Amplitude in einem Bereich von 3 bis 20 µm, oder
c) beidem
schwingt.

10. Das Verfahren (400) nach Anspruch 8 oder 9, wobei in Verfahrensschritt d) (404) das Verbinden ein Siegeln durch ein Übertragen einer Ultraschallschwingung von dem ersten Fixierelement (103) oder dem weiteren Fixierelement (104) oder beiden auf den gefalteten flächenförmigen Verbund (101) ist.

11. Das Verfahren (400) nach Anspruch 10, wobei die Ultraschallschwingung für eine Dauer in einem Bereich von 50 bis 500 ms angeregt wird.

12. Das Verfahren (400) nach einem der Ansprüche 8 bis 11, wobei in Verfahrensschritt a) (401) der gefaltete flächenförmige Verbund (101) ein Behältervorläufer (102) ist, wobei in Verfahrensschritt d) (404) das Verbinden ein Verschließen des Behältervorläufers (102) ist.

13. Eine Verwendung der Vorrichtung (100) nach einem der Ansprüche 1 bis 7 zu einem Verbinden der ersten Verbundschicht (201) mit der zweiten Verbundschicht (202).

## Claims

1. A device (100) comprising a first fixing element (103), a further fixing element (104) and a folded sheet-like composite (101);
wherein the first fixing element (103) includes a first fixing surface (105) and the further fixing element (104) includes a further fixing surface (106);
wherein the folded sheet-like composite (101) is at least partially fixed between the first fixing surface (105) and the further fixing surface (106);
wherein the folded sheet-like composite (101) includes a first composite portion (107) and a further composite portion (108);
wherein the first composite area (107) includes a first layer sequence including, as overlapping layers in the direction from the further fixing surface (106) to the first fixing surface (105), a first composite layer (201), a second composite layer (202), a third composite layer (203) and a fourth composite layer (204);
wherein in the first composite region (107) the third composite layer (203) is bonded to the fourth composite layer (204);
wherein the further composite area (108) includes a further layer sequence including as overlapping layers in the direction from the further fixing surface (106) to the first fixing surface (105) the first composite layer (201), the second composite layer (202) and the fourth composite layer (204);
wherein in the further composite region (108) the second composite layer (202) is bonded to the fourth composite layer (204);
the further composite region (108) being adjacent to the first composite region (107);
wherein the first composite layer (201) includes a first carrier layer (205);
wherein the second composite layer (202) includes a second carrier layer (208);
wherein the third composite layer (203) includes a third carrier layer (209);
wherein the fourth composite layer (204) includes a fourth carrier layer (212);
wherein in the first composite region (107) the first carrier layer (205) or the fourth carrier layer (212) or both in each case is **characterised by** a greater layer thickness than the second carrier layer (208) or the third carrier layer (209) or both in each case;
wherein in the further composite region (108) the second carrier layer (208) is **characterised by** a greater layer thickness than in the first composite region (107);
wherein the further fixing surface (106) includes a recess (213);
wherein the first bonding area (107) and the further bonding area (108) are each at least partially located between the recess (213) and the first fixing surface (105).

2. The device (100) according to claim 1, wherein the first composite layer (201) includes as the first composite layer sequence in the direction from the further fixing surface (106) to the first fixing surface (105) the first carrier layer (205) and a first barrier layer (206); wh
erein the second composite layer (202) includes a second barrier layer (207) and the second carrier layer (208) as a second composite layer sequence in the direction from the further fixing surface (106) to the first fixing surface (105);
wherein the third composite layer (203) includes, as a third composite layer sequence in the direction from the further fixing surface (106) to the first fixing surface (105), the third carrier layer (209) and a third barrier layer (210);
wherein said fourth composite layer (204) includes a fourth barrier layer (211) and said fourth carrier layer (212) as a fourth composite layer sequence in the direction from said further fixing surface (106) to said first fixing surface (105).

3. The device (100) according to any of the preceding claims, wherein the first fixing element (103) or the further fixing element (104) or both is a sonotrode.

4. The apparatus (100) according to claim 3, wherein the sonotrode comprises one selected from the group consisting of an alloy comprising at least 90% by weight of titanium or aluminum or both, based on the weight of the alloy; a steel; and a piezoceramic or a combination of at least two thereof.

5. The device (100) according to one of the preceding claims, wherein the first composite area (107) is **characterized by** a first width (109);
wherein the first width (109) is in a range of 1 to 10 mm.

6. The device (100) according to one of the preceding claims, wherein the further composite area (108) is **characterized by** a further width (110);
the further width (110) being in a range of 1 to 10 mm.

7. The device (100) according to one of the preceding claims, wherein the recess (213) has a depth (214) in a range of 0.1 to 5 mm.

8. A method (400) comprising as method steps (401 to 404)
a) Providing a folded sheet-like composite (101),
wherein the folded sheet-like composite (101) includes a first composite layer (201), a second composite layer (202), a third composite layer (203), a fourth composite layer (204), a first composite area (107) and a further composite area (108); wherein an intermediate region (500) is located between the first composite layer (201) and the second composite layer (202);
wherein the first composite layer (201) includes a first carrier layer (205);
wherein the second composite layer (202) includes a second carrier layer (208);
wherein the third composite layer (203) includes a third carrier layer (209);
wherein the fourth composite layer (204) includes a fourth carrier layer (212);
wherein the first composite region (107) includes a first layer sequence including as overlapping layers in the direction from the intermediate region (500) through the first layer sequence the second composite layer (202), the third composite layer (203) and the fourth composite layer (204);
wherein in the first composite region (107) the third composite layer (203) is bonded to the fourth composite layer (204);
wherein in the first composite region (107) the first carrier layer (205) or the fourth carrier layer (212) or both in each case is **characterised by** a greater layer thickness than the second carrier layer (208) or the third carrier layer (209) or both in each case;
wherein the further composite region (108) includes a further layer sequence including as overlapping layers in the direction from the intermediate region (500) through the further layer sequence the second composite layer (202) and the fourth composite layer (204);
wherein in the further composite region (108) the second composite layer (202) is bonded to the fourth composite layer (204);
wherein in the further composite region (108) the second carrier layer (208) is **characterised by** a greater layer thickness than in the first composite region (107);
b) Providing a first fixing element (103) including a first fixing surface (105) and a further fixing element (104) including a further fixing surface (106);
wherein the further fixing surface (106) includes a recess (213);
c) Contacting the fourth composite layer (204) with the first fixing surface (105), the first composite layer (201) with the further fixing surface (106), and the first composite layer (201) with the second composite layer (202);
wherein the first bonding area (107) and the further bonding area (108) are each at least partially located between the recess (213) and the first fixing surface (105); and
d) Joining the first composite layer (201) to the second composite layer (202).

9. The method (400) according to claim 8, wherein in method step d) (404) the first fixing surface (105) or the further fixing surface (106) or both are fixed against the planar bond (101) with
a) a frequency in the range 10 to 50 kHz, or
b) an amplitude in the range of 3 to 20 µm, or
c) both
swings.

10. The method (400) according to claim 8 or 9, wherein in method step d) (404) the joining is sealing by transmitting an ultrasonic vibration from the first fixing element (103) or the further fixing element (104) or both to the folded sheet-like composite (101).

11. The method (400) according to claim 10, wherein the ultrasonic vibration is excited for a duration in a range of 50 to 500 ms.

12. The method (400) according to any one of claims 8 to 11, wherein in method step a) (401) the folded sheet-like composite (101) is a container precursor (102),
wherein in method step d) (404) the joining is a sealing of the container precursor (102).

13. A use of the apparatus (100) according to any one of claims 1 to 7 for bonding the first composite layer (201) to the second composite layer (202).

## Revendications

1. Un dispositif (100) comprenant un premier élément de fixation (103), un autre élément de fixation (104) et un composite en forme de feuille pliée (101) ;
dans lequel le premier élément de fixation (103) comprend une première surface de fixation (105) et l'autre élément de fixation (104) comprend une autre surface de fixation (106) ;
dans lequel le composite en forme de feuille pliée (101) est au moins partiellement fixé entre la première surface de fixation (105) et l'autre surface de fixation (106) ;
dans lequel le composite en forme de feuille pliée (101) comprend une première partie composite (107) et une autre partie composite (108) ;
dans laquelle la première zone composite (107) comprend une première séquence de couches comprenant, en tant que couches se chevauchant dans la direction allant de la surface de fixation supplémentaire (106) à la première surface de fixation (105), une première couche composite (201), une deuxième couche composite (202), une troisième couche composite (203) et une quatrième couche composite (204) ;
où dans la première région composite (107), la troisième couche composite (203) est liée à la quatrième couche composite (204) ;
dans laquelle la zone composite supplémentaire (108) comprend une autre séquence de couches comprenant comme couches de chevauchement dans la direction allant de la surface de fixation supplémentaire (106) à la première surface de fixation (105) la première couche composite (201), la deuxième couche composite (202) et la quatrième couche composite (204) ;
dans laquelle, dans la région composite supplémentaire (108), la deuxième couche composite (202) est liée à la quatrième couche composite (204) ;
l'autre région composite (108) étant adjacente à la première région composite (107) ;
dans laquelle la première couche composite (201) comprend une première couche de support (205) ;
dans laquelle la deuxième couche composite (202) comprend une deuxième couche de support (208) ;
dans laquelle la troisième couche composite (203) comprend une troisième couche de support (209) ;
dans laquelle la quatrième couche composite (204) comprend une quatrième couche de support (212) ;
dans laquelle, dans la première zone composite (107), la première couche de support (205) ou la quatrième couche de support (212) ou les deux dans chaque cas, est **caractérisée par** une épaisseur de couche plus importante que la deuxième couche de support (208) ou la troisième couche de support (209) ou les deux dans chaque cas ;
la deuxième couche de support (208) étant **caractérisée par** une épaisseur de couche plus importante que dans la première région composite (107) ;
dans laquelle la surface de fixation supplémentaire (106) comprend un évidement (213); da
ns lequel la première zone de collage (107) et la zone de collage supplémentaire (108) sont chacune situées au moins partiellement entre l'évidement (213) et la première surface de fixation (105).

2. Le dispositif (100) selon la revendication 1, dans lequel la première couche composite (201) comprend, en tant que première séquence de couches composites dans la direction allant de la surface de fixation supplémentaire (106) à la première surface de fixation (105), la première couche de support (205) et une première couche de barrière (206) ; da
ns laquelle la deuxième couche composite (202) comprend une deuxième couche barrière (207) et la deuxième couche de support (208) en tant que deuxième séquence de couches composites dans la direction allant de la surface de fixation supplémentaire (106) à la première surface de fixation (105) ;
dans laquelle la troisième couche composite (203) comprend, en tant que troisième séquence de couches composites dans la direction allant de la surface de fixation supplémentaire (106) à la première surface de fixation (105), la troisième couche de support (209) et une troisième couche de barrière (210) ;
dans lequel ladite quatrième couche composite (204) comprend une quatrième couche barrière (211) et ladite quatrième couche de support (212) en tant que quatrième séquence de couches composites dans la direction allant de ladite autre surface de fixation (106) à ladite première surface de fixation (105).

3. Le dispositif (100) selon l'une des revendications précédentes, dans lequel le premier élément de fixation (103) ou l'autre élément de fixation (104) ou les deux sont une sonotrode.

4. Le dispositif (100) selon la revendication 3, dans lequel la sonotrode comprend un élément choisi dans le groupe constitué par un alliage comprenant au moins 90% en poids de titane ou d'aluminium ou des deux, sur la base du poids de l'alliage ; un acier ; et une piézocéramique ou une combinaison d'au moins deux de ces éléments.

5. Le dispositif (100) selon l'une des revendications précédentes, dans lequel la première zone composite (107) est **caractérisée par** une première largeur (109) ;
dans laquelle la première largeur (109) est comprise entre 1 et 10 mm.

6. Le dispositif (100) selon l'une des revendications précédentes, dans lequel l'autre zone composite (108) est **caractérisée par** une autre largeur (110) ;
la largeur supplémentaire (110) étant comprise entre 1 et 10 mm.

7. Le dispositif (100) selon l'une des revendications précédentes, dans lequel l'évidement (213) a une profondeur (214) dans une plage de 0,1 à 5 mm.

8. Un procédé (400) comprenant comme étapes de processus (401 à 404)
a) Fournir un composite en forme de feuille pliée (101),
dans lequel le composite en forme de feuille pliée (101) comprend une première couche composite (201), une deuxième couche composite (202), une troisième couche composite (203), une quatrième couche composite (204), une première zone composite (107) et une autre zone composite (108) ;
dans laquelle une région intermédiaire (500) est située entre la première couche composite (201) et la deuxième couche composite (202) ;
dans laquelle la première couche composite (201) comprend une première couche de support (205) ;
dans laquelle la deuxième couche composite (202) comprend une deuxième couche de support (208) ;
dans laquelle la troisième couche composite (203) comprend une troisième couche de support (209) ;
dans laquelle la quatrième couche composite (204) comprend une quatrième couche de support (212) ;
dans laquelle la première région composite (107) comprend une première séquence de couches comprenant, en tant que couches se chevauchant dans la direction allant de la région intermédiaire (500) à travers la première séquence de couches, la deuxième couche composite (202), la troisième couche composite (203) et la quatrième couche composite (204) ;
où dans la première région composite (107), la troisième couche composite (203) est liée à la quatrième couche composite (204) ;
dans laquelle, dans la première zone composite (107), la première couche de support (205) ou la quatrième couche de support (212) ou les deux dans chaque cas, est **caractérisée par** une épaisseur de couche plus importante que la deuxième couche de support (208) ou la troisième couche de support (209) ou les deux dans chaque cas ;
dans laquelle l'autre région composite (108) comprend une autre séquence de couches comprenant, en tant que couches se chevauchant dans la direction allant de la région intermédiaire (500) à travers l'autre séquence de couches, la deuxième couche composite (202) et la quatrième couche composite (204) ;
dans laquelle, dans la région composite supplémentaire (108), la deuxième couche composite (202) est liée à la quatrième couche composite (204) ;
la deuxième couche de support (208) étant **caractérisée par** une épaisseur de couche plus importante que dans la première région composite (107) ;
b) Fournir un premier élément de fixation (103) comprenant une première surface de fixation (105) et un autre élément de fixation (104) comprenant une autre surface de fixation (106) ;
dans laquelle la surface de fixation supplémentaire (106) comprend un évidement (213) ;
c) Mettre en contact de la quatrième couche composite (204) avec la première surface de fixation (105), de la première couche composite (201) avec l'autre surface de fixation (106) et de la première couche composite (201) avec la deuxième couche composite (202) ;
dans lequel la première zone de liaison (107) et la zone de liaison supplémentaire (108) sont chacune situées au moins partiellement entre l'évidement (213) et la première surface de fixation (105) ; et
d) Assembler la première couche composite (201) à la deuxième couche composite (202).

9. Le procédé (400) selon la revendication 8, dans lequel, à l'étape de procédé d) (404), la première surface de fixation (105) ou l'autre surface de fixation (106) ou les deux sont fixées contre la liaison plane (101) avec
a) une fréquence dans la gamme de 10 à 50 kHz, ou
b) une amplitude comprise entre 3 et 20 µm, ou
c) les deux
des balançoires.

10. Le procédé (400) selon la revendication 8 ou 9, dans lequel, à l'étape de procédé d) (404), l'assemblage est scellé en transmettant une vibration ultrasonique du premier élément de fixation (103) ou de l'autre élément de fixation (104) ou des deux au composite en forme de feuille pliée (101).

11. Le procédé (400) selon la revendication 10, dans laquelle la vibration ultrasonore est excitée pendant une durée comprise entre 50 et 500 ms.

12. Le procédé (400) selon l'une quelconque des revendications 8 à 11, dans lequel, à l'étape a) (401) du procédé, le composite en forme de feuille pliée (101) est un précurseur de conteneur (102),
dans laquelle, à l'étape d) (404) de la procédé, l'assemblage est un scellage du précurseur du récipient (102).

13. Utilisation de l'dispositif (100) selon l'une quelconque des revendications 1 à 7 pour coller la première couche composite (201) à la deuxième couche composite (202).
